(19) Europäisches Patentamt
European Patent Office
Office européen des brevets

(11) EP 4 696 755 A1

(12) **EUROPEAN PATENT APPLICATION**
published in accordance with Art. 153(4) EPC

(43) Date of publication:
**18.02.2026 Bulletin 2026/08**

(21) Application number: **24839868.7**

(22) Date of filing: **19.04.2024**

(51) International Patent Classification (IPC):
***C09J 9/00*** *(2006.01)* ***C09J 4/00*** *(2006.01)*
***C09J 11/06*** *(2006.01)* ***C08K 5/07*** *(2006.01)*
***C08K 5/00*** *(2006.01)* ***C08K 5/16*** *(2006.01)*
***C09J 7/00*** *(2018.01)* ***C09J 7/35*** *(2018.01)*
***C08F 20/00*** *(2006.01)* ***C08F 2/50*** *(2006.01)*

(52) Cooperative Patent Classification (CPC):
**C08F 2/50; C08F 20/00; C08K 5/00; C08K 5/07; C08K 5/16; C09J 4/00; C09J 7/00; C09J 7/35; C09J 9/00; C09J 11/06**

(86) International application number:
**PCT/KR2024/005336**

(87) International publication number:
**WO 2025/014051 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 KR 20230089201**
**05.01.2024 KR 20240002362**

(71) Applicant: **Seoul National University R&DB Foundation**
**Seoul 08826 (KR)**

(72) Inventors:
- **KWON, Min Sang**
  **Seongnam-si Gyeonggi-do 13581 (KR)**
- **LEE, Seokju**
  **Seoul 08785 (KR)**
- **KWON, Yonghwan**
  **Seoul 08730 (KR)**

(74) Representative: **AWA Sweden AB**
**Matrosgatan 1**
**Box 5117**
**200 71 Malmö (SE)**

(54) **ULTRAVIOLET-BLOCKING ADHESIVE COMPOSITION, METHOD FOR PREPARING ADHESIVE RESIN BY USING SAME, AND ADHESIVE FILM MANUFACTURED USING SAME**

(57) The present invention relates to an ultraviolet blocking adhesive composition, a method for preparing an adhesive resin using the same, and an adhesive film prepared therefrom. According to the present invention, by applying a photoinitiating system activated by visible light to the adhesive composition, an adhesive resin with an excellent polymerization rate of monomers can be prepared even when an ultraviolet absorber is added. The adhesive composition of the present invention comprises an ultraviolet absorber, exhibits a high resin conversion rate, and is capable of curing within a matrix through visible-light-induced polymerization even when UV transmission is not possible. Furthermore, since the resin has excellent transparency, it can be effectively used as an optically clear adhesive for blocking ultraviolet rays.

【FIG. 1】

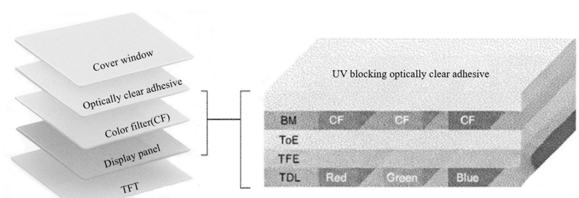


EP 4 696 755 A1

## Description

[Technical Field]

The present disclosure relates to an ultraviolet blocking adhesive composition, a method for preparing an adhesive resin using the same, and an adhesive film prepared therefrom, and more particularly, to an ultraviolet blocking adhesive composition exhibiting excellent resin conversion rate even when an ultraviolet absorber is added through the application of a photoinitiating system, a method for preparing an adhesive resin using the same, and an adhesive film prepared therefrom.

[Background Art]

An adhesive is one of the essential components of electronic devices such as smartphones. As various types of smartphones have been introduced, adhesives are required to meet diverse demands beyond merely bonding individual film elements. In particular, it is necessary for the adhesive to exhibit properties that dissipate stress while maintaining an appropriate balance of flexibility and elasticity, as well as optical transparency and stability against moisture and heat. That is, it is important for the adhesive to maintain adhesion even under deformation and not to be damaged or broken under various conditions.

A representative adhesive used in conventional displays is an ultraviolet curable adhesive. For example, Korean Patent Publication No. 10-2019-0011220 discloses an ultraviolet curable pressure-sensitive adhesive composition for displays and the like, which can form an adhesive layer having excellent tackiness, the composition comprising polyurethane (meth)acrylate, a polymerizable monomer, a hydroxyl group-containing mono(meth)acrylate, a photopolymerization initiator, and a tackifier resin.

However, in display panels of recently developed foldable smartphones, no separate polarizer is provided in order to reduce power consumption and minimize environmental influences. Accordingly, an adhesive having ultraviolet blocking properties is required to replace the function of the polarizer that protects the panel from external ultraviolet radiation. For example, Korean Patent Publication No. 10-2022-0109090 discloses an ultraviolet blocking adhesive for non-polarized panels, which comprises an adhesive and an ultraviolet absorber.

However, when an ultraviolet absorber is added to an adhesive in this manner, the manufacturing of the adhesive becomes difficult due to the ultraviolet absorption rate, and the effect of the photocuring method is hindered. To solve this problem, a method using a photosensitizer to cure the adhesive by visible light can be employed; however, this method has a drawback in that the optical transparency of the film in the visible light region is significantly reduced.

Accordingly, there is a need for the development of an ultraviolet blocking adhesive that can be cured by visible light while exhibiting excellent optical transparency.

[Disclosure]

[Technical Problem]

An object of the present disclosure is to provide an ultraviolet blocking adhesive composition exhibiting a high resin conversion rate and excellent transparency even when an ultraviolet absorber is included.

Another object of the present disclosure is to provide a method for preparing a transparent adhesive resin using the ultraviolet blocking adhesive composition.

Still another object of the present disclosure is to provide an adhesive film prepared using the ultraviolet blocking adhesive composition.

[Technical Solution]

In order to achieve the above objects, the present disclosure provides an ultraviolet blocking adhesive composition comprising a polymerizable monomer having an ethylenically unsaturated bond; a photoinitiating system that absorbs light in the wavelength range of 300 to 800 nm to initiate a curing reaction; and an ultraviolet absorber.

In one embodiment of the present disclosure, the photoinitiating system may comprise a photocatalyst having a thermally activated delayed fluorescence (TADF) property, and a co-initiator.

In the present disclosure, the photocatalyst may have a property of absorbing light in the wavelength range of 400 to 800 nm.

In the present disclosure, the photocatalyst may be a cyanoarene-based compound.

In the present disclosure, the photocatalyst may be represented by the following Chemical Formula 1:

[Chemical Formula 1]

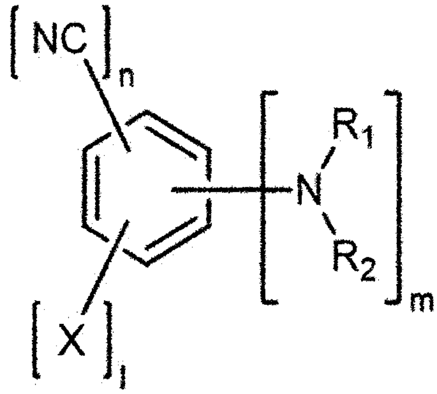

wherein, in Chemical Formula 1,

$R_1$ and $R_2$ are each independently hydrogen, deuterium, a halogen atom, a nitro group ($-NO_2$), a cyano group (-CN), -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or $R_1$ and $R_2$ are linked to form a substituted or unsubstituted carbazole structure,
X is a halogen atom selected from the group consisting of F, Cl, Br, and I,
n is 1 or 2, m is an integer from 3 to 5, l is 0 or 1, and n + m + l is an integer from 4 to 6.

In the present disclosure, the photocatalyst may be represented by the following Chemical Formula 2 or 3:

[Chemical Formula 2]

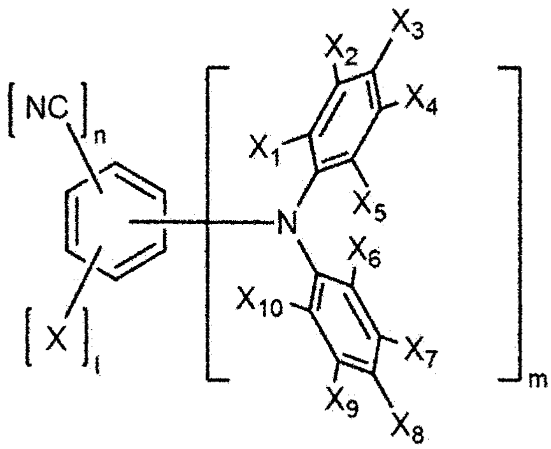

[Chemical Formula 3]

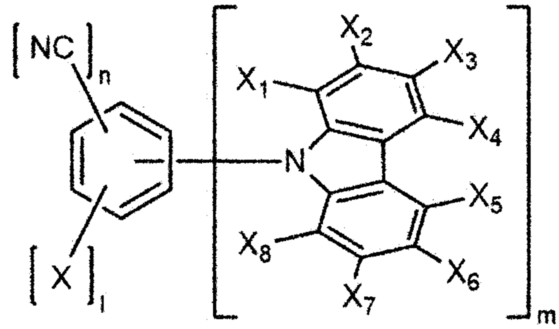

wherein, in Chemical Formula 2, $X_1$ to $X_{10}$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl;

wherein, in Chemical Formula 3, $X_1$ to $X_8$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; and

wherein, in Chemical Formulae 2 and 3, X is each independently a halogen atom selected from the group consisting of F, Cl, Br, and I, n is each independently 1 or 2, m each independently is an integer from 3 to 5, 1 is each independently 0 or 1, and n + m + 1 is each independently an integer from 4 to 6.

In the present disclosure, the co-initiator used together with the photocatalyst may comprise a co-initiator I comprising an anionic borate salt compound or an amine compound; and a co-initiator II comprising a cationic salt compound or an alkyl halide.

In the present disclosure, the borate salt compound may be represented by the following Chemical Formula 4:

[Chemical Formula 4]

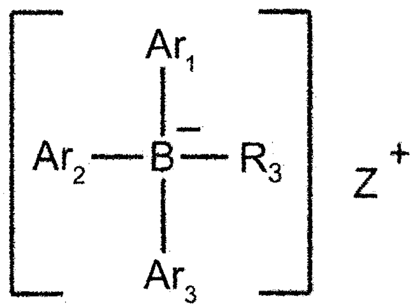

wherein, in Chemical Formula 4,

$R_3$ is a $C_1$-$C_{24}$ alkyl or $-CH_2SiR'_3$ (where R' is hydrogen or a $C_1$-$C_{24}$ alkyl),
$Ar_1$ to $Ar_3$ are each independently a substituted or unsubstituted $C_4$-$C_{18}$ aryl, and
$Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion.

In the present disclosure, the borate salt compound may be represented by the following Chemical Formula 5:

[Chemical Formula 5]

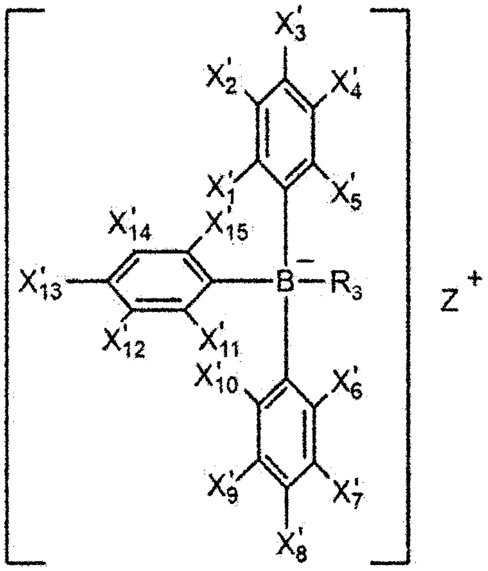

wherein, in Chemical Formula 5,

$R_3$ is a $C_1$-$C_{24}$ alkyl or -$CH_2SiR'_3$ (where R' is hydrogen or a $C_1$-$C_{24}$ alkyl),
$X'_1$ to $X'_{15}$ are each independently hydrogen, deuterium, a halogen atom, -$NO_2$, -CN, -COOR, -$NRCOCH_3$, -SR, -$COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a $C_1$-$C_{24}$ alkyl, and x is an integer from 0 to 2; and
$Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion.

In the present disclosure, the amine compound may be represented by the following Chemical Formula 6:

[Chemical Formula 6]

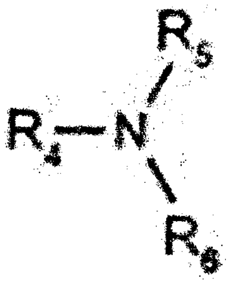

wherein, in Chemical Formula 6, $R_4$, $R_5$, and $R_6$ are each independently hydrogen, deuterium, $NH_xR_{2-x}$, -OR, -COR, -COOR, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a $C_1$-$C_{24}$ alkyl, and x is an integer from 0 to 2.
In the present disclosure, the cationic salt compound may be at least one compound selected from the group consisting of an iodonium salt, a sulfonium salt, and a phosphonium salt.
In the present disclosure, the cationic salt compound may be an iodonium salt compound represented by the following Chemical Formula 7:

[Chemical Formula 7]

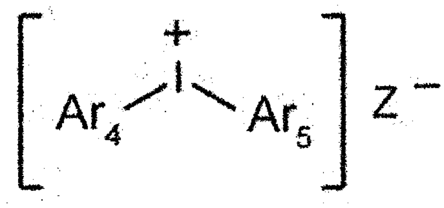

wherein, in Chemical Formula 7,

$Ar_4$ and $Ar_5$ are each independently a substituted or unsubstituted $C_4$-$C_{18}$ aryl, and
$Z^-$ is $PF6^-$, $SbF6^-$, $AsF6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In the present disclosure, the cationic salt compound may be a sulfonium salt compound represented by the following Chemical Formula 8:

[Chemical Formula 8]

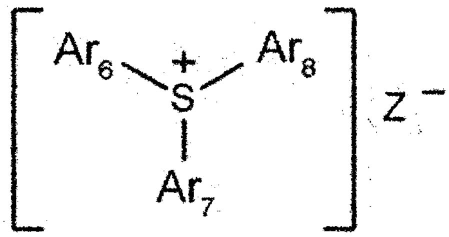

wherein, in Chemical Formula 8,

$Ar_6$ to $Ar_8$ are each independently a substituted or unsubstituted $C_4$-$C_{18}$ aryl, and
$Z^-$ is $PF6^-$, $SbF6^-$, $AsF6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In the present disclosure, the cationic salt compound may be a phosphonium salt compound represented by the following Chemical Formula 9:

[Chemical Formula 9]

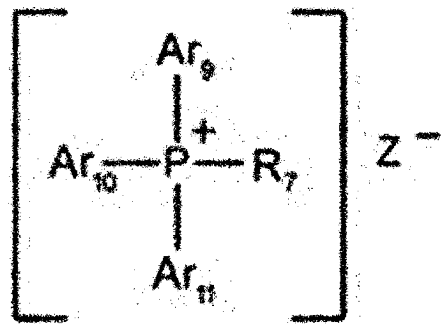

wherein, in Chemical Formula 9,

$R_7$ is hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a $C_1$-$C_{24}$ alkyl, and x is an integer from 0 to 2;
$Ar_9$ to $Ar_{11}$ are each independently a substituted or unsubstituted $C_4$-$C_{18}$ aryl; and
$Z^-$ is $PF6^-$, $SbF6^-$, $AsF6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In the present disclosure, the alkyl halide may be represented by the following Chemical Formula 13:

[Chemical Formula 13]

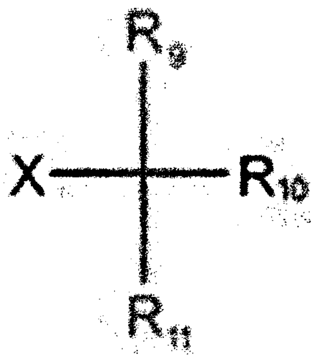

wherein, in Chemical Formula 13,

$R_9$, $R_{10}$, and $R_{11}$ are each independently hydrogen, deuterium, -OR", -COR", -COOR", or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R" is hydrogen or a substituted or unsubstituted $C_1$-$C_{24}$ alkyl, $C_2$-$C_{24}$ alkenyl, $C_2$-$C_{24}$ alkynyl, or $C_6$-$C_{18}$ aryl; and
X is a halogen atom selected from the group consisting of F, Cl, Br, and I.

In one embodiment of the present disclosure, the photoinitiating system may comprise a Norrish type I photoinitiator.
In the present disclosure, the photoinitiating system may absorb light in the wavelength range of 300 to 600 nm, preferably in the wavelength range of 380 to 460 nm, to initiate a curing reaction.
In the present disclosure, the Norrish type I photoinitiator may comprise a compound represented by the following Chemical Formula 14:

[Chemical Formula 14]

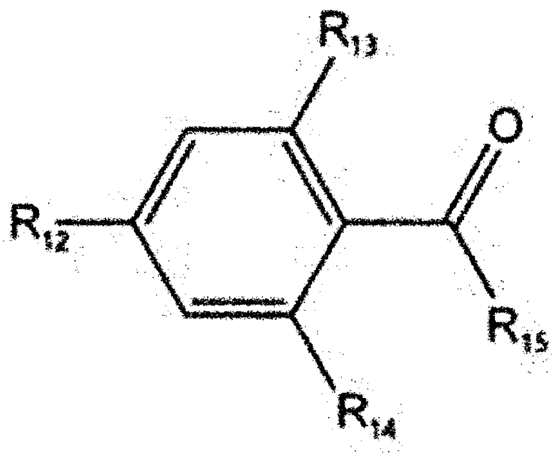

wherein, in Chemical Formula 14,

$R_{12}$, $R_{13}$, and $R_{14}$ are each independently hydrogen, deuterium, or a substituted or unsubstituted $C_1$-$C_{24}$ alkyl, $C_2$-$C_{24}$ alkenyl, $C_2$-$C_{24}$ alkynyl, $C_4$-$C_{18}$ aryl, mercapto group (-SH), hydroxy group (-OH), alkylthio group (-SR), or alkoxy group (-OR); and

$R_{15}$ is a substituted or unsubstituted $C_1$-$C_{24}$ alkyl, $C_2$-$C_{24}$ alkenyl, $C_2$-$C_{24}$ alkynyl, $C_4$-$C_{18}$ aryl, phosphine oxide group, phosphinate group, amine group, or morpholino group.

In the present disclosure, the Norrish type I photoinitiator may comprise at least one compound selected from the group consisting of an acylphosphine oxide-based photoinitiator, an acetophenone-based photoinitiator, a benzoin-based photoinitiator, and a benzoin ether-based photoinitiator.

In the present disclosure, the Norrish type I photoinitiator may comprise at least one compound selected from the group consisting of 2-hydroxy-1-(4-(4-(2-hydroxy-2-methylpropiophenone)benzyl)phenyl)-2-methylpropan-1-one (Irgacure 127), 1-hydroxycyclohexylphenyl ketone (Irgacure 184), 2-benzyl-2-dimethylamino-4'-morpholinobutyrophenone (Irgacure 369), 2,2-dimethoxy-1,2-diphenylethan-1-one (Irgacure 651), bis(2,4,6-trimethylbenzoyl)phenylphosphine oxide (Irgacure 819), 2,4,6-trimethylbenzoyl-diphenylphosphine oxide (Irgacure TPO), ethyl(2,4,6-trimethylbenzoyl) phenylphosphinate (Irgacure TPO-L), 2-dimethylamino-2-(4-methylbenzyl)-1-(4-morpholin-4-ylphenyl)-butan-1-one (Irgacure 379), 2-methyl-1-(4-(methylthio)phenyl)-2-morpholinopropan-1-one (Irgacure 907), 2-hydroxy-2-methyl-1-phenyl-propan-1-one (Irgacure 1173), and 1-(4-(2-hydroxyethoxy)-phenyl)-2-hydroxy-2-methyl-1-propan-1-one (Irgacure 2959).

In the present disclosure, the adhesive composition may further comprise a co-initiator.

In the present disclosure, the photoinitiator may be a Norrish type II photoinitiator that undergoes a Norrish type II reaction with the co-initiator.

In the present disclosure, the Norrish type II photoinitiator may comprise a compound represented by the following Chemical Formula 15:

[Chemical Formula 15]

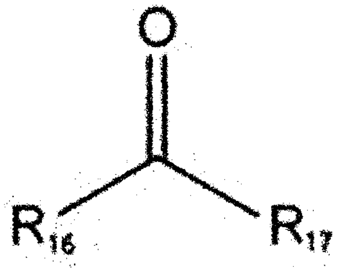

wherein, in Chemical Formula 15,

$R_{16}$ and $R_{17}$ are each independently a substituted or unsubstituted $C_1$-$C_{24}$ alkyl, $C_2$-$C_{24}$ alkenyl, $C_2$-$C_{24}$ alkynyl, or

$C_4$-$C_{18}$ aryl, and

$R_{16}$ and $R_{17}$ exist independently, or at least one of the respective atoms of $R_{16}$ and $R_{17}$ are linked to each other to form a ring.

In the present disclosure, the Norrish type II photoinitiator may comprise at least one compound selected from the group consisting of a thioxanthone-based photoinitiator, a benzophenone-based photoinitiator, and a camphorquinone-based photoinitiator.

In the present disclosure, the co-initiator used in combination with the Norrish type II photoinitiator may comprise a compound represented by the following Chemical Formula 6:

[Chemical Formula 6]

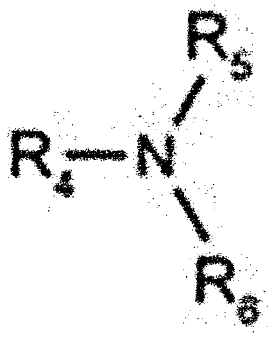

wherein, in Chemical Formula 6, $R_4$, $R_5$, and $R_6$ are each independently hydrogen, deuterium, $NH_xR_{2-x}$, -OR, -COR, -COOR, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a $C_1$-$C_{24}$ alkyl; and x is an integer from 0 to 2.

In the present disclosure, the ultraviolet absorber may have a property of absorbing light in the wavelength range of 200 to 400 nm.

In the present disclosure, the ultraviolet absorber may comprise at least one compound selected from the group consisting of a hydroxyl benzophenone-based compound; a benzotriazole-based compound; a diazenyl-based compound; a hindered amine-based compound; an organometallic compound comprising a metal selected from the group consisting of iron, nickel, and cobalt; a salicylate-based compound; a cinnamate-based derivative; a resorcinol monobenzoate-based compound; an oxanilide-based compound; a hydroxybenzoate-based compound; an organic or inorganic pigment; carbon black; a coumarin-based compound; a stilbene derivative; a benzoxazolyl-based compound; a benzimidazolyl-based compound; a naphthylimide-based compound; a diamino stilbene sulfonate-based compound; a triazine stilbene-based compound; a phenyl ester-based compound; an s-triazine-based compound; a hydroxyphenyl derivative of a benzoxazole-based compound; a hexamethylphosphoric triamide-based compound; a benzylidene malonate-based compound; an aliphatic amine or amino alcohol-based derivative; a nitro aromatic compound; a substituted acrylonitrile-based compound; a ferrocene-based compound; a nitrophenylazophenol-based compound; an azo-based compound; a polyene-based polymer derivative; a piperidine-based compound; a piperidineoxy-based compound; a boron trifluoride-based compound; a thiadiazole-based compound; and a phosphonate-based compound.

The present disclosure also provides a method for preparing an adhesive resin, comprising a step of polymerizing a polymerizable monomer by irradiating visible light onto the ultraviolet blocking adhesive composition.

In the present disclosure, the visible light irradiation may be performed for 1 second to 1 hour.

In the present disclosure, the method for preparing an adhesive resin may further comprise a step of additionally irradiating visible light after applying the prepared resin onto a substrate.

The present disclosure also provides an ultraviolet blocking adhesive film formed using the ultraviolet blocking adhesive composition.

[Advantageous Effects]

According to the present disclosure, by applying a photoinitiating system activated by visible light to an adhesive composition, an adhesive resin having an excellent polymerization rate of monomers can be prepared even when an ultraviolet absorber is added. The adhesive composition of the present disclosure comprises an ultraviolet absorber and exhibits a high resin conversion rate, and since the polymerization reaction is initiated by visible light, curing can be achieved within a matrix through which ultraviolet light cannot penetrate. In addition, the resin exhibits excellent

transparency, and thus can be effectively used as an optically clear adhesive for blocking ultraviolet light.

[Description of Drawings]

FIG. 1 is a schematic view illustrating a display structure to which an adhesive composition according to one embodiment of the present disclosure is applied.

FIG. 2 is a graph showing the absorption wavelength of an ultraviolet absorber used in one example of the present disclosure.

FIG. 3 is a graph showing the transmittance measurement results depending on whether an ultraviolet absorber is added to the adhesive composition prepared according to one example of the present disclosure.

FIG. 4 is a graph showing the transmittance measurement results according to the types of ultraviolet absorbers in the adhesive composition prepared according to one example of the present disclosure.

FIG. 5 is a graph showing the conversion rate measurement results depending on the presence or absence of an ultraviolet absorber and the content of a photoinitiator in the adhesive composition prepared according to one example of the present disclosure.

FIG. 6 is a graph showing the transmittance measurement results according to the types of photoinitiating systems in the adhesive film prepared according to one example of the present disclosure.

[Best Mode for Invention]

Hereinafter, specific embodiments of the present disclosure will be described in greater detail. Unless otherwise defined, all technical and scientific terms used in the present specification have the same meanings as those commonly understood by one skilled in the art to which the present disclosure pertains. In general, the nomenclature used in the present specification is well known and commonly used in the relevant technical field.

In describing the present disclosure, the term "substitution" of a functional group refers to a case in which one or more hydrogen atoms of the functional group are replaced with another functional group. For example, one or more hydrogen atoms may each independently be substituted with deuterium, a halogen atom, a nitro group ($-NO_2$), a cyano group (-CN), -COOR, $-NRCOCH_3$, -SR, $-COONH_xR_{2-x}$, $NH_xR_{2-x}$, $-CONH_xR_{2-x}$, -OR, -SR, - SOR, -SOOR, $-NH_xR_{2-x}$, $-PH_xR_{2-x}$, $-P(OR)_2$, a $C_1$-$C_{24}$ alkyl, a $C_2$-$C_{24}$ alkenyl, a $C_2$-$C_{24}$ alkynyl, a $C_1$-$C_{24}$ alkoxy, or a $C_4$-$C_{18}$ aryl. Herein, the "R" is used to describe the bonding form of the functional group and is not particularly limited, and may represent a hydrocarbon group such as hydrogen, a $C_1$-$C_{24}$ alkyl, a $C_2$-$C_{24}$ alkenyl, a $C_2$-$C_{24}$ alkynyl, or a $C_4$-$C_{18}$ aryl.

In the present disclosure, the term "alkyl" refers to a hydrocarbon group having a single bond(for example, methyl, ethyl, n-propyl, isopropyl, n-butyl, isobutyl, tert-butyl, sec-butyl, 1-methylbutyl, 1-ethylbutyl, n-pentyl, isopentyl, neopentyl, tert-pentyl, n-hexyl, 1-methylpentyl, 2-methylpentyl, 4-methyl-2-pentyl, 3,3-dimethylbutyl, 2-ethylbutyl, n-heptyl, 1-methylhexyl, cyclopentylmethyl, cyclohexylmethyl, n-octyl, tert-octyl, 1-methylheptyl, 2-ethylhexyl, 2-propylpentyl, n-nonyl, 2,2-dimethylheptyl, 1-ethylpropyl, 1,1-dimethylpropyl, isohexyl, 2-methylpentyl, 4-methylhexyl, 5-methylhexyl, and the like). The term "alkenyl" refers to a hydrocarbon group containing one or more double bonds (for example, vinyl, allyl, etc.), and the term "alkynyl" refers to a hydrocarbon group containing one or more triple bonds (for example, ethynyl, propynyl, etc.). The term "aryl" refers to a hydrocarbon having one or more aromatic rings (for example, phenyl, biphenyl, naphthyl, anthracenyl, phenanthryl, terphenyl, fluorenyl, furan, pyrrolyl, thiophenyl, thiazolyl, etc.).

In describing the present disclosure, the terms "alkyl," "alkenyl," "alkynyl," or "aryl" are to be interpreted as including not only functional groups consisting solely of carbon and hydrogen atoms but also heteroalkyl, heteroalkenyl, heteroalkynyl, or heteroaryl groups in which one or more carbon atoms are substituted with nitrogen, oxygen, or sulfur. In addition, the terms "alkyl," "alkenyl," and "alkynyl" include linear, branched, and cyclic forms.

In the present disclosure, the term "adhesive" is to be interpreted as including not only an adhesive in the general sense but also a pressure-sensitive adhesive (PSA), that is, a tacky adhesive.

The present disclosure relates to an ultraviolet blocking adhesive composition, an adhesive resin prepared using the same, and a method for preparing the adhesive resin.

The ultraviolet blocking adhesive composition of the present disclosure is characterized by the application of a photoinitiating system that is activated by visible light. Since the photoinitiating system used in the present disclosure is activated by visible light, curing can be achieved even within a matrix through which ultraviolet light cannot penetrate, and a resin having a high conversion rate and excellent transparency can be prepared even when an ultraviolet absorber is used.

The ultraviolet blocking adhesive composition of the present disclosure comprises a polymerizable monomer having an ethylenically unsaturated bond; a photoinitiating system that absorbs light in the wavelength range of 300 to 800 nm to initiate a curing reaction; and an ultraviolet absorber.

The polymerizable monomer used in the adhesive composition of the present disclosure refers to a monomer

having an ethylenically unsaturated bond, and when light is irradiated, a polymerization reaction occurs between the monomers by radicals generated from the photoinitiating system of the present disclosure, thereby forming a cured adhesive resin.

In one embodiment of the present disclosure, the polymerizable monomer may be an acrylate-based compound. Specifically, the polymerizable monomer may be a (meth)acrylate or (meth)acrylamide compound, wherein the term "(meth)acryl" refers collectively to both acryl and methacryl.

For example, the polymerizable monomer may comprise at least one compound selected from the group consisting of methyl (meth)acrylate, ethyl (meth)acrylate, propyl (meth)acrylate, isopropyl (meth)acrylate, lauryl (meth) acrylate, 2-ethylhexyl (meth)acrylate, dicyclopentadiene (meth)acrylate, dicyclopentenyloxyethyl (meth)acrylate, dicyclopentenyl (meth)acrylate, isobornyl (meth)acrylate, (meth)acrylamide, N,N-dimethyl(meth)acrylamide, (meth)acryloylmorpholine, isobutoxymethyl(meth)acrylamide, t-octyl (meth)acrylamide, diacetone(meth)acrylamide, ethyldiethylene glycol (meth)acrylate, polyethylene glycol mono(meth)acrylate, polypropylene glycol mono(meth)acrylate, bornyl(meth) acrylate, methyltriethylene glycol (meth)acrylate, ethylene glycol di(meth)acrylate, dicyclopentenyl di(meth)acrylate, triethylene glycol di(meth)acrylate, tetraethylene glycol di(meth)acrylate, tricyclodecane diyl dimethylene di(meth)acrylate, tris(2-hydroxyethyl)isocyanurate di(meth)acrylate, tris(2-hydroxyethyl)isocyanurate tri(meth)acrylate, trimethylolpropane tri(meth)acrylate, tripropylene glycol di(meth)acrylate, neopentyl glycol di(meth)acrylate, 1,4-butanediol di(meth)acrylate, 1,6-hexanediol di(meth)acrylate, pentaerythritol tri(meth)acrylate, pentaerythritol tetra(meth)acrylate, polyester di(meth)acrylate, polyethylene glycol di(meth)acrylate, dipentaerythritol penta(meth)acrylate, dipentaerythritol tetra(meth)acrylate, trimethylolpropane tetra(meth)acrylate, tetrachlorophenyl (meth)acrylate, 2-tetrachlorophenoxyethyl (meth)acrylate, tetrahydrofurfuryl (meth)acrylate, tetrabromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth) acrylate, 2-hydroxyethyl (meth)acrylate, 2-hydroxypropyl (meth)acrylate, phenoxyethyl (meth)acrylate, butoxyethyl (meth)acrylate, pentachlorophenyl (meth)acrylate, and pentabromophenyl (meth)acrylate.

In the present disclosure, the polymerizable monomer may be a mixture of an alkyl (meth)acrylate and an alkyl (meth)acrylate having a hydroxyl group. The molar ratio of the alkyl (meth)acrylate to the alkyl (meth)acrylate having a hydroxyl group may range from 50:50 to 99:1, preferably from 60:40 to 95:5, and more preferably from 70:30 to 90:10.

In one embodiment of the present disclosure, the photoinitiating system may comprise a photocatalyst having a thermally activated delayed fluorescence (TADF) property and a co-initiator.

The photocatalyst used in the present disclosure absorbs light in the visible region, particularly in the wavelength range of 400 to 800 nm, and has the property of thermally activated delayed fluorescence (TADF) emission.

In a general fluorescence mechanism, three out of four excitons are triplet excitons that are deactivated, resulting in low luminous efficiency. In contrast, in the thermally activated delayed fluorescence mechanism, the three triplet excitons are upconverted to the singlet exciton state and then emit light, allowing all four excitons to emit light, thereby exhibiting very high luminous efficiency.

According to the photoinitiating system employing the photocatalyst, the catalyst can be recycled through electron transfer, allowing multiple uses. Thus, unlike general photoinitiators, polymerization can be initiated with a small amount of the photocatalyst, and the penetration depth can be increased, enabling deep curing.

In the present disclosure, the photocatalyst may be a cyanoarene-based compound having a thermally activated delayed fluorescence property.

Specifically, the cyanoarene-based photocatalyst may be represented by the following Chemical Formula 1:

[Chemical Formula 1]

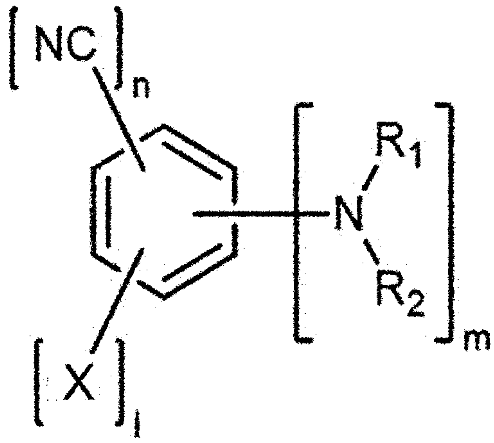

wherein, in Chemical Formula 1, $R_1$ and $R_2$ are each independently hydrogen, deuterium, a halogen atom, a nitro group ($-NO_2$), a cyano group (-CN), -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or $R_1$ and $R_2$ are linked to form a substituted or unsubstituted carbazole structure. Preferably, $R_1$ and $R_2$ are each independently a substituted or unsubstituted $C_6$-$C_{18}$ aryl, or are linked to form a substituted or unsubstituted carbazole structure.

In Chemical Formula 1, X is a halogen atom selected from the group consisting of F, Cl, Br, and I, and preferably F.

In Chemical Formula 1, n is 1 or 2, m is an integer from 3 to 5, l is 0 or 1, and n+m+l is an integer from 4 to 6. Preferably, in Chemical Formula 1, n is 1 or 2, m is 3 or 4, l is 0 or 1, and n+m+l is 5 or 6.

In one embodiment of the present disclosure, the photocatalyst of Chemical Formula 1 may be represented by the following Chemical Formula 2:

[Chemical Formula 2]

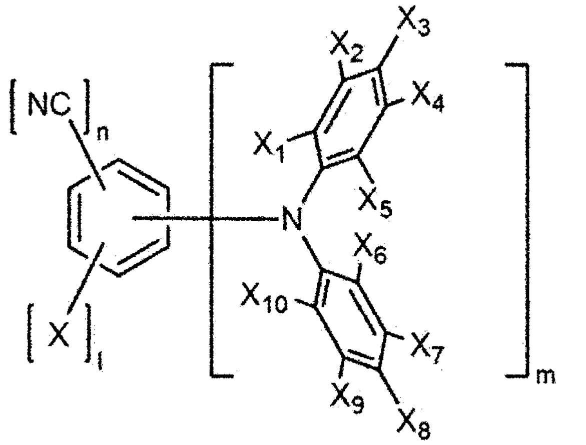

wherein, in Chemical Formula 2, $X_1$ to $X_{10}$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. Preferably, $X_1$ to $X_{10}$ are each independently hydrogen, a halogen atom, a cyano group, or a substituted or unsubstituted $C_1$-$C_4$ alkyl or $C_1$-$C_4$ alkoxy.

In Chemical Formula 2, the definitions of X, n, m, and l are as defined in Chemical Formula 1.

In one embodiment of the present disclosure, the photocatalyst of Chemical Formula 1 may also be represented by the following Chemical Formula 3:

[Chemical Formula 3]

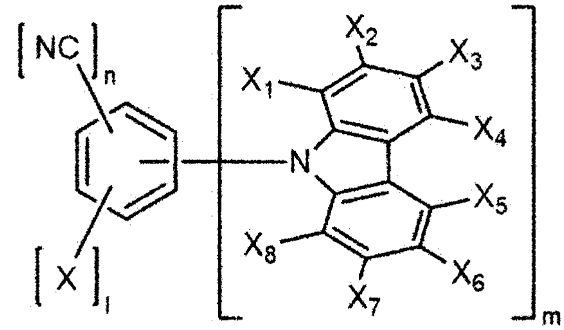

wherein, in Chemical Formula 3, $X_1$ to $X_8$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. Preferably, $X_1$ to $X_8$ are each independently hydrogen, a halogen atom, a cyano group, or a substituted or unsubstituted $C_1$-$C_4$ alkyl or $C_1$-$C_4$ alkoxy.

In Chemical Formula 3, the definitions of X, n, m, and l are as defined in Chemical Formula 1.

In an exemplary embodiment of the present disclosure, the photocatalyst may comprise at least one compound selected from the group consisting of 2,4,5,6-tetrakis(diphenylamino)isophthalonitrile (4DP-IPN), 2,4,5,6-tetrakis(carbazol-9-yl)isophthalonitrile (4Cz-IPN), 2,4,5,6-tetrakis(3,6-di-tert-butylcarbazol-9-yl)isophthalonitrile (4tCz-IPN), 2,4,6-tris(diphenylamino)-5-fluoroisophthalonitrile (3DP-F-IPN), 2,4,6-tris(carbazol-9-yl)-5-fluoroisophthalonitrile (3Cz-F-IPN), 2,4,5,6-tetrakis(bis(4-methoxyphenyl)amino)isophthalonitrile (4DMDP-IPN), 2,4,5,6-tetrakis(bis(4-cyanophenyl) amino)isophthalonitrile (4DCDP-IPN), and 2,3,5,6-tetrakis(diphenylamino)benzonitrile (4DP-BN). Preferably, the photocatalyst may be 4DP-IPN or 4Cz-IPN.

The structures of the above-mentioned exemplary compounds may be represented as follows:

[4DP-IPN]

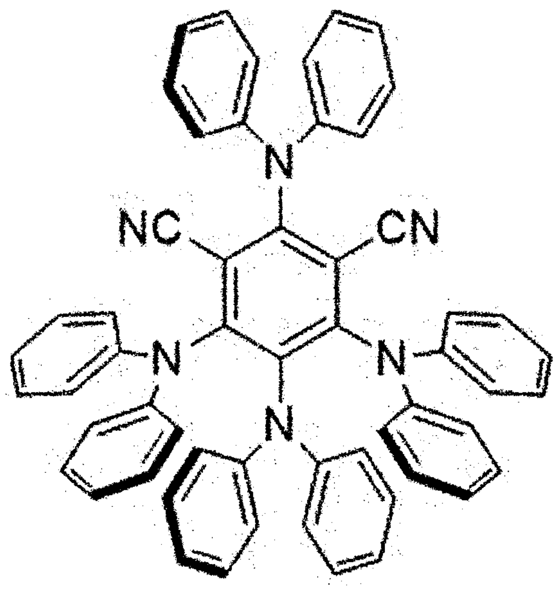

[4Cz-IPN]

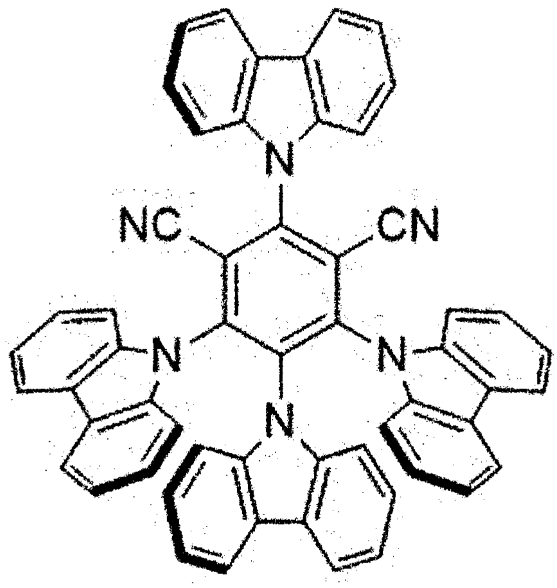

[4tCz-IPN]

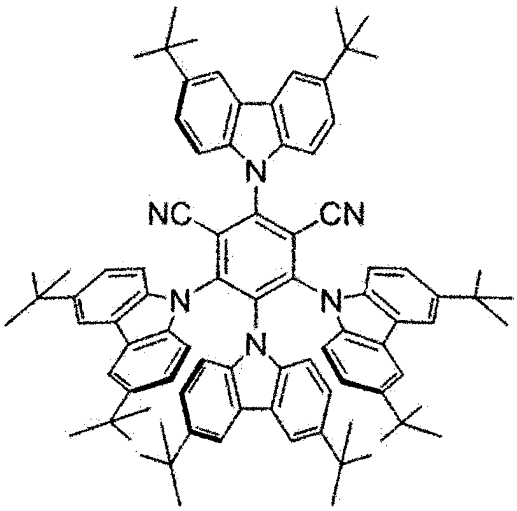

[3DP-F-IPN]

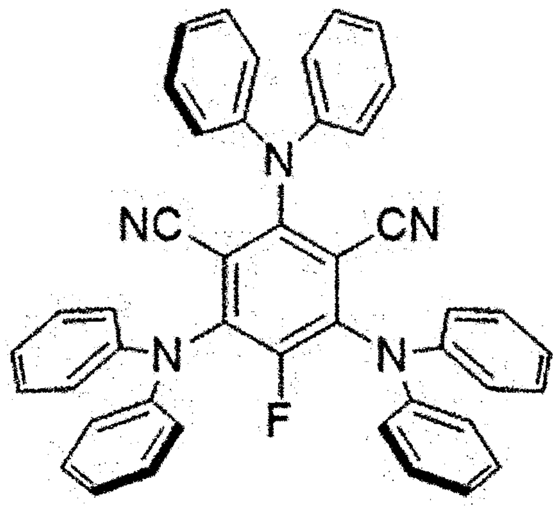

[3Cz-F-IPN]

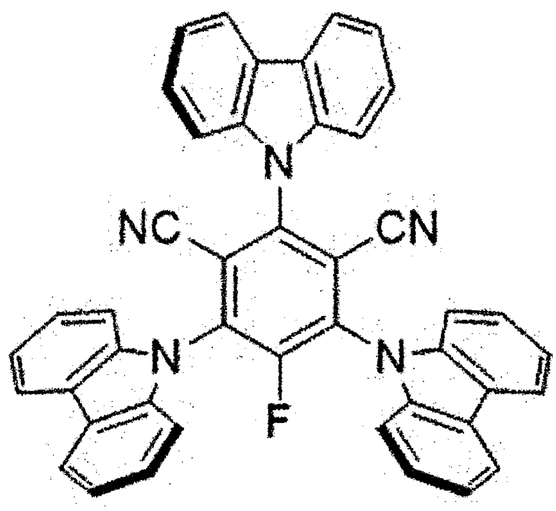

[4DMDP-IPN]

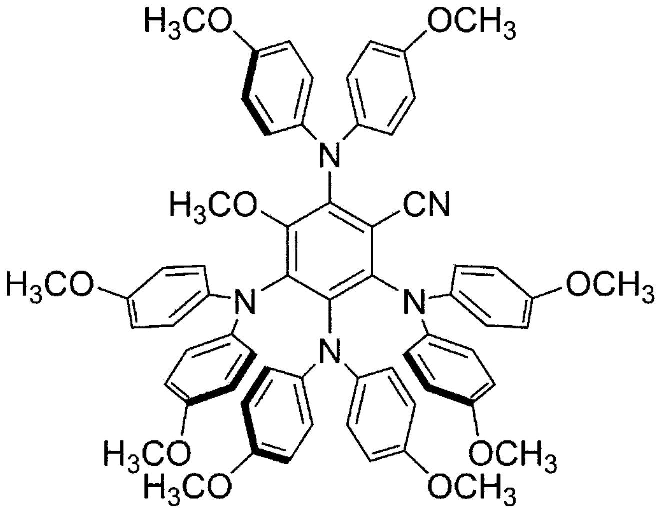

[4DCDP-IPN]

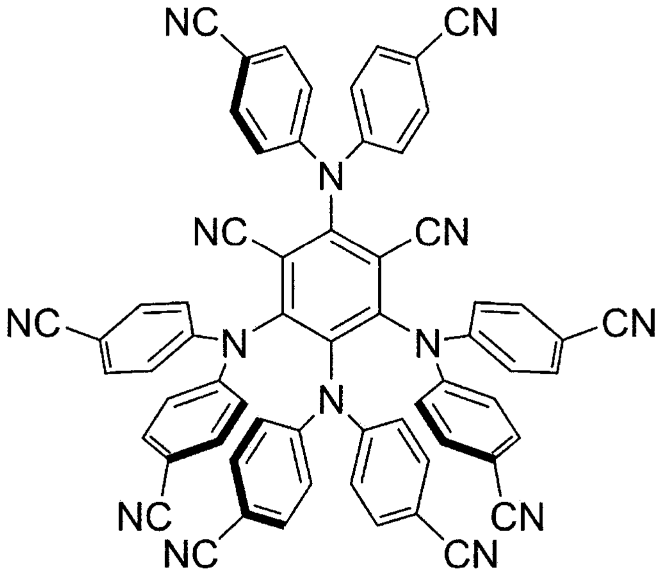

[4DP-BN]

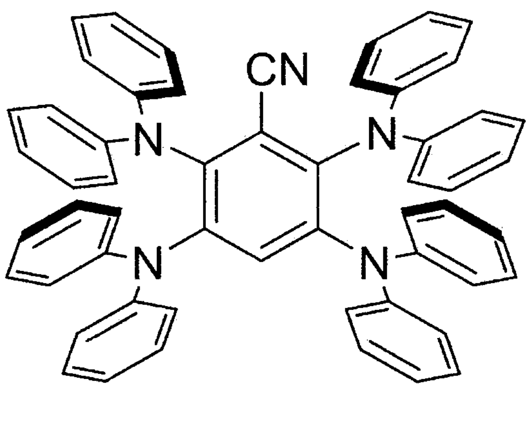

In the ultraviolet blocking adhesive composition of the present disclosure, the amount of the photocatalyst used may be 0.00001 to 0.01 mol, for example, 0.0001 to 0.005 mol, based on 100 mol of the polymerizable monomer. Accordingly, by employing the present disclosure, efficient photopolymerization can be achieved even with a very small amount of the photocatalyst relative to the monomer.

In the ultraviolet blocking adhesive composition of the present disclosure, the co-initiator used in the photoinitiating system is an ionic substance that induces polymerization of monomers by forming radicals through a dissociation mechanism. In the present disclosure, by combining the photocatalyst, particularly a cyanoarene-based photocatalyst having thermally activated delayed fluorescence properties, with the co-initiator, an adhesive composition exhibiting excellent polymerization efficiency can be obtained even in the presence of an ultraviolet absorber.

In the photoinitiating system used in the present disclosure, the photocatalyst, after absorbing light, efficiently forms an excited triplet state through intersystem crossing between a singlet state and a triplet state. The excited photocatalyst can generate radical ion species of the co-initiator through an oxidation-reduction reaction with the co-initiator, and the radical ionic co-initiator generated through electron transfer can undergo a bond dissociation reaction to form highly reactive alkyl or aryl radicals that participate in polymerization of polymers.

In the present disclosure, the co-initiator may be classified into co-initiator I and co-initiator II, which may be used alone or in combination, and preferably in combination.

In one embodiment of the present disclosure, the co-initiator I may comprise an anionic co-initiator, specifically comprising at least one borate salts.

The co-initiator I may have a structure in which one or more substituted or unsubstituted $C_4$-$C_{18}$ aryl groups are bonded to a boron atom of the borate salt. Specifically, the anionic co-initiator may be represented by the following Chemical Formula 4:

[Chemical Formula 4]

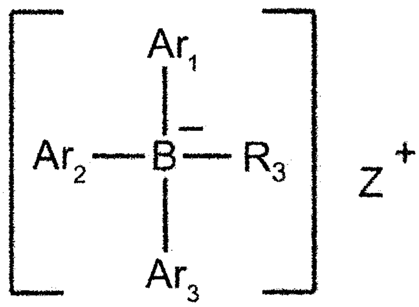

wherein, in Chemical Formula 4, $R_3$ is a $C_1$-$C_{24}$ alkyl or $-CH_2SiR'_3$ (where R' is hydrogen or a $C_1$-$C_{24}$ alkyl), and preferably a $C_1$-$C_6$ alkyl. $Ar_1$ to $Ar_3$ are each independently substituted or unsubstituted $C_4$-$C_{18}$ aryl, preferably substituted or unsubstituted $C_6$-$C_{12}$ aryl.

In one embodiment of the present disclosure, the co-initiator I may have a structure represented by the following Chemical Formula 5:

[Chemical Formula 5]

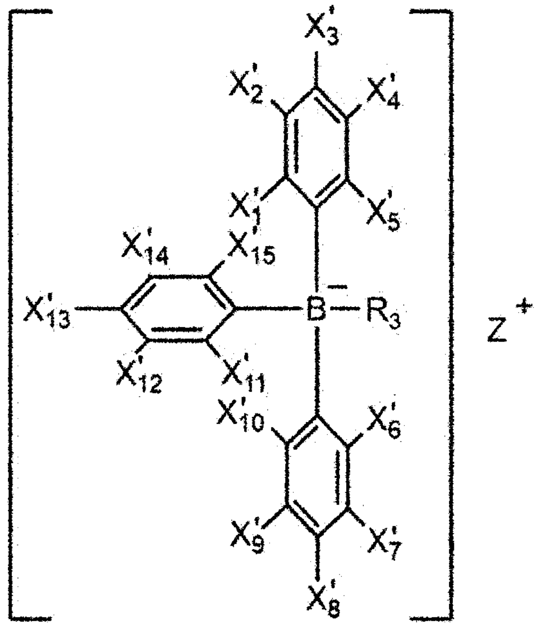

wherein, in Chemical Formula 5, $R_3$ is a $C_1$-$C_{24}$ alkyl or $-CH_2SiR'_3$, and R' is hydrogen or a $C_1$-$C_{24}$ alkyl. Preferably, $R_3$ is a $C_1$-$C_6$ alkyl.

$X'_1$ to $X'_{15}$ are each independently hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. R is hydrogen or a $C_1$-$C_{24}$ alkyl, and x is an integer from 0 to 2. Preferably, $X'_1$ to $X'_{15}$ are each independently hydrogen or a substituted or unsubstituted $C_1$-$C_4$ alkyl.

In Chemical Formula 5, $Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion, and preferably an ammonium ion.

In an exemplary embodiment of the present disclosure, at least one borate salt selected from the group consisting of [2-(butanoyloxy)ethyl]trimethylazanium butyltriphenylborate, tetrabutylammonium butyltriphenylborate, tetramethylammonium methyl(biphenyl)dimesitylborate, tetramethylammonium methyl(1-naphthyl)dimesitylborate, tetrabutylammonium butyltrinaphthylborate, tetramethylammonium butyl(1-naphthyl)dimesitylborate, tetradodecylammonium methyl(1-naphthyl)dimesitylborate, tetramethylammonium methyl(1-naphthyl)dimesitylborate, tetramethylammonium butyl(1-naphthyl)dichloromesitylborate, cyanine butyl(1-naphthyl)dichloromesitylborate, tetramethylammonium methyl(2-naphthyl)dimesitylborate, tetramethylammonium butyl(2-naphthyl)dimesitylborate, tetramethylammonium methyl(9-anthracenyl)bis(2-methylphenyl)borate, tetramethylammonium butyl(9-anthracenyl)bis(2-methylphenyl)borate, tetramethylammonium butyl(9-phenanthryl)dimesitylborate, tetramethylammonium butyl(9-phenanthryl)dichloromesitylborate, tetramethylammonium butyl(9-phenanthryl)bis(dichloromesityl)borate, tetramethylammonium butyl(1-pyrenyl)dimesitylborate, tetramethylammonium butyl(1-pyrenyl)dichloromesitylborate, tetramethylammonium methyl(biphenyl)bis(dichloromesityl)borate, iodonium hexyltris(3-fluorophenyl)borate, pyrylium hexyltris(3-fluorophenyl)borate, and safranin hexyltris(3-fluorophenyl)borate may be used as the co-initiator I.

In addition, the co-initiator I of the present disclosure may comprise at least one amine compounds, which may be represented by the following Chemical Formula 6:

[Chemical Formula 6]

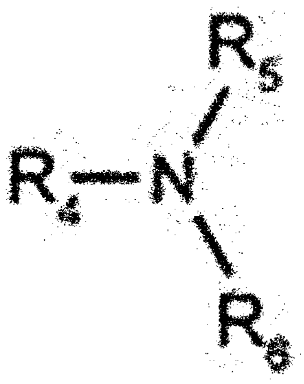

wherein, in Chemical Formula 6, $R_4$, $R_5$, and $R_6$ are each independently hydrogen, deuterium, $NH_xR_{2-x}$, -OR, -COR, -COOR, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, R is hydrogen or a $C_1$-$C_{24}$ alkyl, and x is an integer from 0 to 2.

In an exemplary embodiment of the present disclosure, the amine-based co-initiator may be selected from the group consisting of at least one of primary amines such as methylamine, ethylamine, propylamine, butylamine, pentylamine, hexylamine, octylamine, nonylamine, decylamine, 1-methyl-n-pentylamine, 1-ethyl-n-butylamine, (1-methyl-3-methylbutyl)amine, (1-methyl-2-methylbutyl)amine, (1-ethyl-2-methylpropyl)amine, (1,1-dimethylbutyl)amine, and (1-ethyl-1-methylpropyl)amine; secondary amines such as dimethylamine, ethylmethylamine, butylethylamine, and (ethyl-1-methylbutyl)amine; tertiary amines such as triethylamine, N,N-diisopropylethylamine, butylethylmethylamine, and (diethyl-1,2,3-trimethylbutyl)amine; and other amines such as 2-(dimethylamino)ethyl acrylate, 2-(dimethylamino) ethyl acetate, 2-(dimethylamino)ethyl methacrylate, 2-(dimethylamino)ethyl methacrylate, aniline, and dimethylbenzylamine.

In one embodiment of the present disclosure, the co-initiator II may comprise at least one cationic salt compound selected from the group consisting of iodonium salts, sulfonium salts, and phosphonium salts.

Specifically, the co-initiator II may comprise a cationic co-initiator having a structure in which one or more substituted or unsubstituted aryl groups are bonded to the central atom, that is, iodine (I), sulfur (S), or phosphorus (P), in the iodonium, sulfonium, or phosphonium salt, respectively. The iodonium, sulfonium, and phosphonium co-initiators may be represented by the following Chemical Formulas 7 to 9:

[Chemical Formula 7]

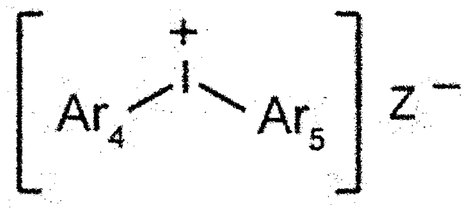

[Chemical Formula 8]

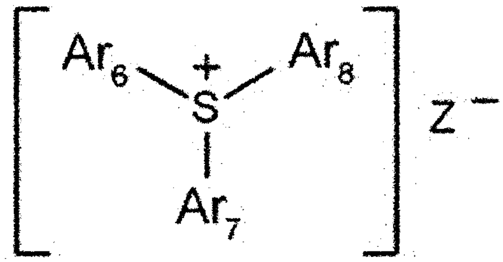

[Chemical Formula 9]

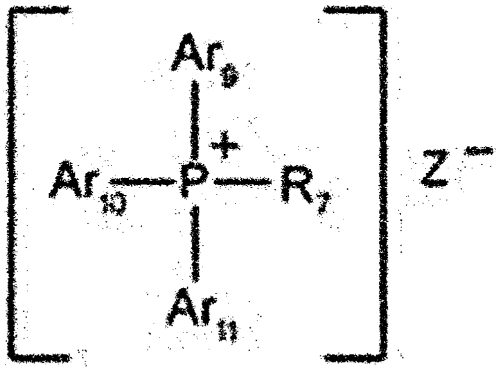

In Chemical Formulas 7 to 9, $Ar_4$ to $Ar_{11}$ are each independently substituted or unsubstituted $C_4$-$C_{18}$ aryl, preferably substituted or unsubstituted $C_6$-$C_{12}$ aryl.

In addition, in Chemical Formula 9, R7 is each independently hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, R is hydrogen or a $C_1$-$C_{24}$ alkyl, and x is an integer from 0 to 2.

In Chemical Formulas 7 to 9, $Z^-$ is $PF6^-$, $SbF6^-$, $AsF6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_6$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In one embodiment of the present disclosure, the iodonium salt co-initiator may be a compound represented by the following Chemical Formula 10:

[Chemical Formula 10]

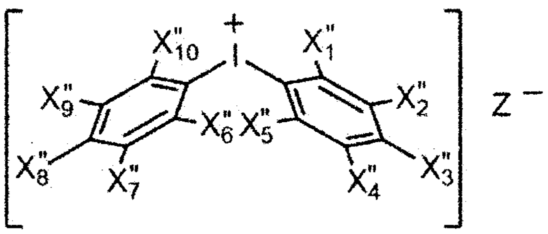

wherein, in Chemical Formula 10, $X''_1$ to $X''_{10}$ are each independently hydrogen, deuterium, a halogen atom, $-NO_2$, -CN, -COOR, $-NRCOCH_3$, -SR, $-COONH_xR_{2-x}$, $-NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a $C_1$-$C_{24}$ alkyl; and x is an integer from 0 to 2.

In Chemical Formula 10, $Z^-$ is $PF6^-$, $SbF6^-$, $AsF6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In an exemplary embodiment of the present disclosure, at least one iodonium salt co-initiators may be selected from the group consisting of diphenyliodonium hexafluorophosphate, (4-methylphenyl)(4-(2-methylpropyl)phenyl)iodonium hexafluorophosphate, bis(4-methylphenyl)iodonium hexafluorophosphate, bis(dodecylphenyl)iodonium hexafluorophosphate, bis(4-hexylphenyl)iodonium hexafluoroantimonate, bis(4-hexylphenyl)iodonium hexafluorophosphate, (4-hexylphenyl)phenyl iodonium hexafluoroantimonate, (4-hexylphenyl)phenyl iodonium hexafluorophosphate, [4-(octyloxy)phenyl](phenyl)iodonium hexafluoroantimonate, bis(4-octylphenyl)iodonium hexafluoroantimonate, (4-sec-butylphenyl)-(4'-methylphenyl)iodonium hexafluorophosphate, (4-isopropylphenyl)-(4'-methylphenyl)iodonium hexafluorophosphate, bis(4-octylphenyl)iodonium hexafluorophosphate, (4-octylphenyl)phenyl iodonium hexafluoroantimonate, (4-octylphenyl)phenyl iodonium hexafluorophosphate, bis(4-decylphenyl)iodonium hexafluoroantimonate, bis(4-decylphenyl)iodonium hexafluorophosphate, (4-decylphenyl)phenyl iodonium hexafluoroantimonate, (4-decylphenyl)phenyl iodonium hexafluorophosphate, bis(4-hexylphenyl)iodonium tetrafluoroborate, (4-hexylphenyl)phenyl iodonium tetrafluoroborate, bis(4-octylphenyl) tetrafluoroborate, (4-octylphenyl)phenyl iodonium tetrafluoroborate, bis(4-decylphenyl) iodonium tetrafluoroborate, (4-decylphenyl)phenyl iodonium tetrafluoroborate, bis(4-methoxyphenyl)iodonium bromide,

(4-methoxyphenyl)phenyl iodonium trifluoromethanesulfonate, bis(4-phenoxyphenyl)iodonium tetrafluoroborate, bis(3-methoxysulfonylphenyl)iodonium hexafluorophosphate, bis(4-fluorophenyl)iodonium trifluoromethanesulfonate, bis(4-bromophenyl)iodonium trifluoromethanesulfonate, bis(4-chlorophenyl)iodonium hexafluorophosphate, bis(2,4-dichlorophenyl)iodonium hexafluorophosphate, bis(4-iodophenyl)iodonium tetrafluoroborate, di(3-carboxyphenyl)iodonium hexafluorophosphate, di(3-methoxycarbonylphenyl)iodonium hexafluorophosphate, di(4-acetamidophenyl)iodonium hexafluorophosphate, (4-nitrophenyl)phenyl iodonium nitrate, bis(3-nitrophenyl)iodonium nitrate, and dinaphthyliodonium tetrafluoroborate.

In one embodiment of the present disclosure, the sulfonium salt co-initiator may be a compound represented by the following Chemical Formula 11:

[Chemical Formula 11]

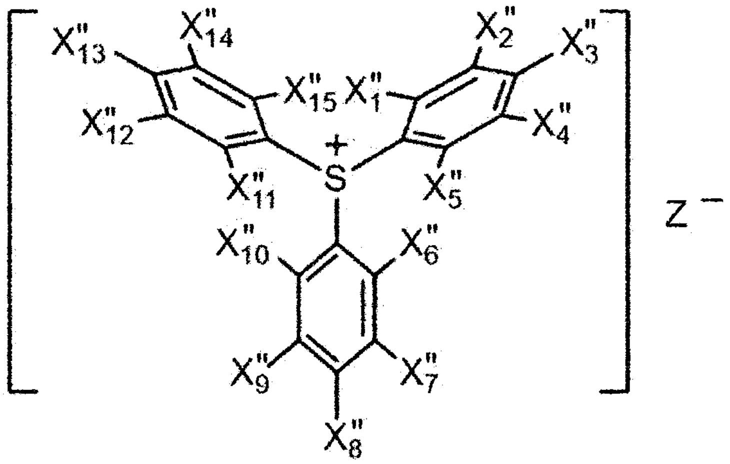

wherein, in Chemical Formula 11, $X''_1$ to $X''_{15}$ are each independently hydrogen, deuterium, a halogen atom, $-NO_2$, -CN, -COOR, $-NRCOCH_3$, -SR, $-COONH_xR_{2-x}$, $-NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a C1-C24 alkyl, and x is an integer from 0 to 2.

In Chemical Formula 11, $Z^-$ is $PF6^-$, $SbF6^-$, $AsF6^-$, $BF_4^-$, $(C_6F_3)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In an exemplary embodiment of the present disclosure, at least one sulfonium salt co-initiators, such as triphenylsulfonium hexafluoroantimonate, triphenylsulfonium hexafluorophosphate, diphenyl-4-methylsulfonium trifluoromethanesulfonate, and the like, may be used.

In one embodiment of the present disclosure, the phosphonium salt co-initiator may be a compound represented by the following Chemical Formula 12:

[Chemical Formula 12]

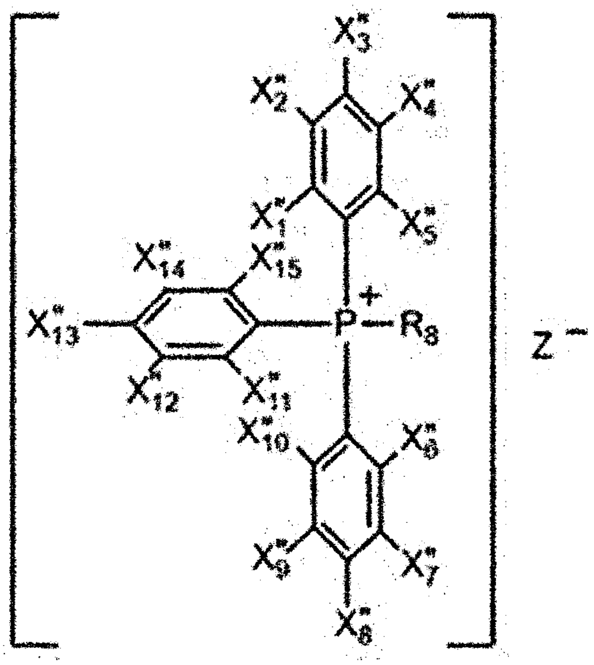

wherein, in Chemical Formula 12, $R_8$ and X"$_1$ to X"$_{15}$ are each independently hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R is hydrogen or a $C_1$-$C_{24}$ alkyl, and x is an integer from 0 to 2.

In Chemical Formula 12, $Z^-$ is $PF6^-$, $SbF6^-$, $AsF6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, $C_1$-$C_{20}$ perfluoroalkylsulfonylmethide, or $C_1$-$C_{20}$ perfluoroalkylsulfonylimide ion.

In an exemplary embodiment of the present disclosure, at least one phosphonium salt co-initiators, such as ethyltriphenylphosphonium hexafluoroantimonate and tetraphenylphosphonium hexafluoroantimonate, and the like, may be used.

In addition, in the present disclosure, the co-initiator II may comprise an alkyl halide, which may be represented by the following Chemical Formula 13:

[Chemical Formula 13]

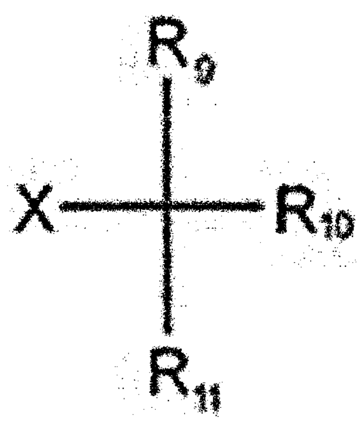

wherein, in Chemical Formula 13, $R_9$, $R_{10}$, and $R_{11}$ are each independently hydrogen, deuterium, -OR", -COR", -COOR", or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; R" is hydrogen or a substituted or unsubstituted $C_1$-$C_{24}$ alkyl, $C_2$-$C_{24}$ alkenyl, $C_2$-$C_{24}$ alkynyl, or $C_6$-$C_{18}$ aryl; and X is a halogen atom selected from the group consisting of F, Cl, Br, and I.

For example, the alkyl halide may be at least one selected from the group consisting of methyl bromide, ethyl bromide, 1-propyl bromide, isopropyl bromide, 1-butyl bromide, 2-butyl bromide, 2-bromo-2-methylbutane, 2-bromo-3-methylbutane, 1-bromo-2,2-dimethylpropane, 2-propyl bromide, 2-butyl bromide, isobutyl bromide, tert-butyl bromide, phenyl bromide, benzyl bromide, phenacyl bromide, 2-phenylethyl bromide, benzoyl bromide, 2-ethyl 2-bromo-3-oxobutanoate, dimethyl bromomalonate, diethyl bromomalonate, dimethyl 2-bromomethylmalonate, and diethyl 2-bromo-2-methylmalonate.

In the present disclosure, the molar ratio of the photocatalyst to the co-initiator may be in the range of 1:10 to 1:5,000.

In the present disclosure, it is preferable to use, as an optimal combination of the photocatalyst having thermally activated delayed fluorescence properties and the co-initiator, a cyanoarene-based photocatalyst in combination with an anionic co-initiator and a cationic co-initiator. In this case, the radical generation efficiency of the photoinitiating system is significantly higher than that of conventional photoinitiators, and accordingly, when the photoinitiating system is applied to a polymerizable monomer and light is irradiated, the polymerization rate may exhibit an excellent effect.

According to the photoinitiating system, even when an ultraviolet absorber is added to the adhesive composition, curing can be achieved at a high polymerization rate, and a resin having excellent transparency may be prepared.

In one embodiment of the present disclosure, the photoinitiating system may comprise a photoinitiator.

The photoinitiator has a property of absorbing light in the wavelength range of 300 to 600 nm to initiate a curing reaction, and preferably has a property of absorbing light in the visible region, that is, in the wavelength range of 380 to 460 nm.

In the present disclosure, the photoinitiator may be classified into a Norrish type I photoinitiator and a Norrish type II photoinitiator. The Norrish reaction is a photochemical reaction occurring in a carbonyl compound, wherein the Norrish type I reaction is a reaction in which cleavage occurs at the alpha-position of the carbonyl compound to generate two free radical intermediates, while the Norrish type II reaction is a reaction in which, in the presence of a hydrogen donor, a gamma-hydrogen is photochemically abstracted by an excited carbonyl compound to form a 1,4-biradical.

In one embodiment of the present disclosure, a Norrish type I photoinitiator may be used as the photoinitiator. At least one of acylphosphine oxide-based photoinitiators, acetophenone-based photoinitiators, benzoin-based photoinitiators, and benzoin ether-based photoinitiators may be used, and it is preferable to use the acylphosphine oxide-based photoinitiator in terms of absorption wavelength and conversion rate.

In this regard, in the examples of the present disclosure, when the acylphosphine oxide-based photoinitiator or the acetophenone-based photoinitiator was applied as the photoinitiator used in an adhesive composition comprising an ultraviolet absorber, it was confirmed that, under the same light intensity, the conversion rate of the film was significantly higher when the acylphosphine oxide-based photoinitiator was used.

In the present disclosure, the Norrish type I photoinitiator may be a compound represented by the following Chemical Formula 14:

[Chemical Formula 14]

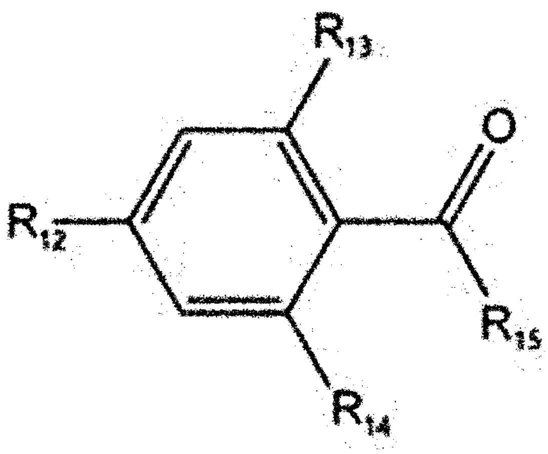

wherein, in Chemical Formula 14,

$R_{12}$, $R_{13}$, and $R_{14}$ are each independently hydrogen, deuterium, or a substituted or unsubstituted $C_1$-$C_{24}$ alkyl, $C_2$-$C_{24}$

alkenyl, $C_2$-$C_{24}$ alkynyl, $C_4$-$C_{18}$ aryl, mercapto group (-SH), hydroxy group (-OH), alkylthio group (-SR), or alkoxy group (-OR); and

$R_{15}$ is a substituted or unsubstituted $C_1$-$C_{24}$ alkyl, $C_2$-$C_{24}$ alkenyl, $C_2$-$C_{24}$ alkynyl, $C_4$-$C_{18}$ aryl, phosphine oxide group, phosphinate group, amine group, or morpholino group.

In an exemplary embodiment of the present disclosure, at least one selected from 2-hydroxy-1-(4-(4-(2-hydroxy-2-methylpropanoyl)benzyl)phenyl)-2-methylpropan-1-one (Irgacure 127), 1-hydroxycyclohexylphenyl ketone (Irgacure 184), 2-benzyl-2-dimethylamino-4'-morpholinobutyrophenone (Irgacure 369), 2,2-dimethoxy-1,2-diphenylethan-1-one (Irgacure 651), bis(2,4,6-trimethylbenzoyl)phenylphosphine oxide (Irgacure 819), 2,4,6-trimethylbenzoyldiphenylphosphine oxide (Irgacure TPO), ethyl(2,4,6-trimethylbenzoyl)phenylphosphinate (Irgacure TPO-L), 2-dimethylamino-2-(4-methylbenzyl)-1-(4-morpholin-4-yl-phenyl)-butan-1-one (Irgacure 379), 2-methyl-1-(4-(methylthio)phenyl)-2-morpholinopropan-1-one (Irgacure 907), 2-hydroxy-2-methyl-1-phenyl-propan-1-one (Irgacure 1173), and 1-(4-(2-hydroxyethoxy)-phenyl)-2-hydroxy-2-methyl-1-propan-1-one (Irgacure 2959) may be used as the photoinitiator.

The structures of the above-mentioned compounds may be represented as follows:

[Irgacure 127]

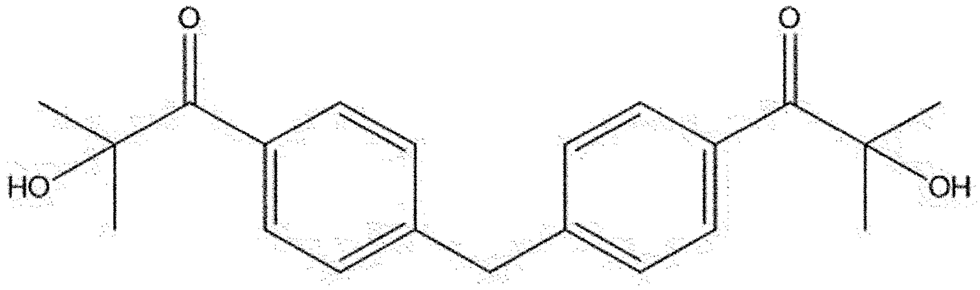

[Irgacure 184]

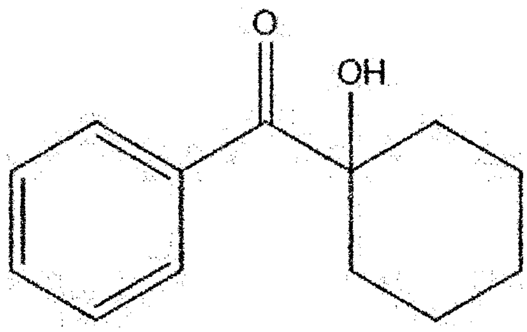

[Irgacure 651]

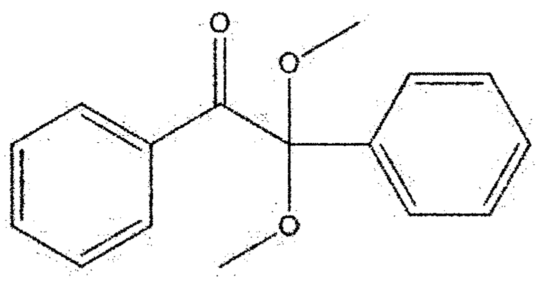

[Irgacure 819]

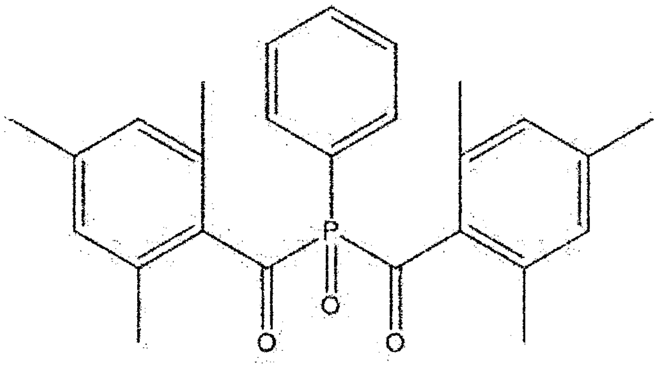

[Irgacure TPO]

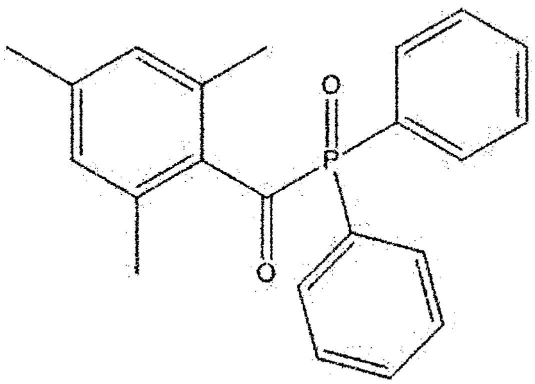

[Irgacure TPO L]

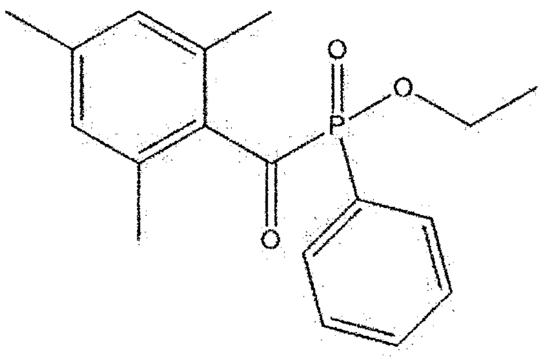

In one embodiment of the present disclosure, the photoinitiator may be a compound that undergoes a Norrish type II reaction with the co-initiator (Norrish type II photoinitiator).

At least one of thioxanthone-based photoinitiators, benzophenone-based photoinitiators, and camphorquinone-based photoinitiators may be used as the Norrish type II photoinitiator.

In the present disclosure, the Norrish type II photoinitiator may be a compound represented by the following Chemical Formula 15:

[Chemical Formula 15]

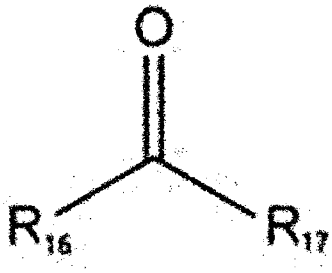

In Chemical Formula 15,

$R_{16}$ and $R_{17}$ are each independently a substituted or unsubstituted $C_1$-$C_{24}$ alkyl, $C_2$-$C_{24}$ alkenyl, $C_2$-$C_{24}$ alkynyl, or $C_4$-$C_{18}$ aryl group,
and $R_{16}$ and $R_{17}$ exist independently, or one or more of the respective atoms of $R_{16}$ and $R_{17}$ are linked to each other to form a ring. The ring may be a 5- to 7-membered alicyclic, aromatic, or heterocyclic ring, and may include one to three rings.

For example, at least one selected from 2,3-bornanedione (camphorquinone), thioxanthone, 2-isopropylthioxanthone (Irgacure ITX), 2,4-diethyl-9H-thioxanthen-9-one (DETX), benzophenone, 4-phenylbenzophenone, methyl-2-benzoylbenzoate, and 1-(4-((4-benzoylphenyl)thio)phenyl)-2-methyl-2-((4-methylphenyl)sulfonyl)-1-propanone may be used as the Norrish type II photoinitiator. Preferably, the photoinitiator may be camphorquinone, benzophenone, or thioxanthone.

The structures of the above-mentioned compounds may be represented as follows:

[Camphorquinone]

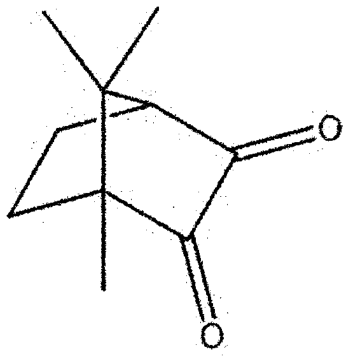

[Benzophenone]

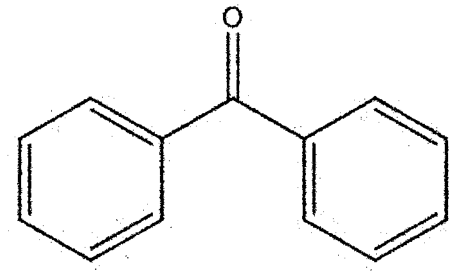

[Thioxanthone]

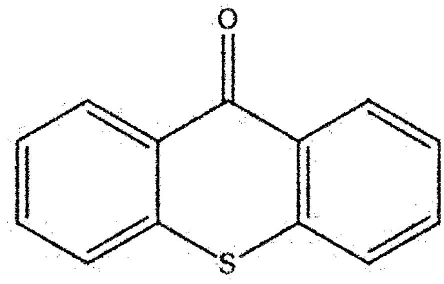

In the ultraviolet-shielding adhesive composition of the present disclosure, the molar amount of the photoinitiator may be 10 to $10^6$ ppm, preferably $10^2$ to $10^4$ ppm, based on the total molar amount of the monomers. Within this range, the adhesive may be effectively cured upon light irradiation.

In one embodiment of the present disclosure, the ultraviolet blocking adhesive composition comprising the photoinitiator may further comprise a co-initiator. In this case, the adhesive composition may be cured by visible light using a photoinitiating system formed by combining the photoinitiator and the co-initiator.

In one embodiment of the present disclosure, the co-initiator may comprise an amine-based co-initiator, and the amine-based co-initiator may comprise a compound represented by the following Chemical Formula 6 described above:

[Chemical Formula 6]

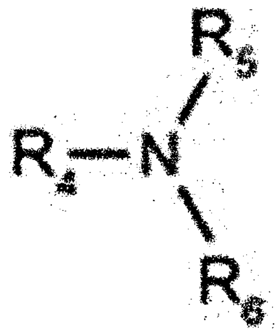

In Chemical Formula 6, $R_4$, $R_5$, and $R_6$ are each independently hydrogen, deuterium, $NH_xR_{2-x}$, -OR, -COR, -COOR, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl group, where R is hydrogen or a $C_1$-$C_{24}$ alkyl group, and x is an integer from 0 to 2.

In an exemplary embodiment of the present disclosure, the amine-based co-initiator may be at least one selected from primary amines such as methylamine, ethylamine, propylamine, butylamine, pentylamine, hexylamine, oxylamine, nonylamine, decylamine, 1-methyl-n-pentylamine, 1-ethyl-n-butylamine, (1-methyl-3-methylbutyl)amine, (1-methyl-2-methylbutyl)amine, (1-ethyl-2-methylpropyl)amine, (1,1-dimethylbutyl)amine, and (1-ethyl-1-methylpropyl)amine; secondary amines such as dimethylamine, ethylmethylamine, butylethylamine, and (ethyl-1-methylbutyl)amine; tertiary amines such as triethylamine, N,N-diisopropylethylamine, butylethylmethylamine, and (diethyl-1,2,3-trimethylbutyl) amine; and other amines such as 2-(dimethylamino)ethyl acrylate, 2-(dimethylamino)ethyl acetate, 2-(dimethylamino)ethyl methacrylate, 2-(dimethylamino)ethyl metacrylate, aniline, and dimethylbenzylamine.

If necessary, at least one additional co-initiators such as an anionic co-initiator (e.g., a borate salt), cationic co-initiators such as an iodonium salt, sulfonium salt, or phosphonium salt may be further used.

In the present disclosure, the co-initiator may be combined with a Norrish type II photoinitiator to generate a 1,4-biradical, thereby curing the adhesive through a photoinitiation reaction. At this time, the molar ratio of the Norrish type II photoinitiator to the co-initiator may be 1:2 to 1:100, preferably 1:5 to 1:20.

Accordingly, by applying a photoinitiating system activated by visible light, the present disclosure enables curing of the adhesive composition at a high polymerization rate even when a ultraviolet absorber is added, while producing a resin having excellent transparency.

In the present disclosure, the ultraviolet absorber serves as a component for blocking ultraviolet light, and by adding it to the adhesive composition, ultraviolet blocking properties can be imparted even to display devices without a polarizing plate.

Specifically, the ultraviolet absorber may have a property of absorbing light in the wavelength range from 200 to 400 nm, for example, from 280 to 400 nm, and may be at least one selected from the group consisting of hydroxyl benzophenone-based compounds, benzotriazole-based compounds, diazenyl-based compounds, hindered amine-based compounds, organometallic compounds comprising one metal selected from the group consisting of iron, nickel, and cobalt, salicylate-based compounds, cinnamate-based derivatives, resorcinol monobenzoate-based compounds, oxanilide-based compounds, hydroxybenzoate-based compounds, organic or inorganic pigments, carbon black, coumarine-based compounds, stilbene-based derivatives, benzoxazolyl-based compounds, benzimidazolyl-based compounds, naphthylimide-based compounds, diamino stilbene sulfonate-based compounds, triazine stilbene-based compounds, phenyl ester-based compounds, S-triazine-based compounds, hydroxyphenyl derivatives of benzoxazole-based compounds, hexamethylphosphoric triamide-based compounds, benzylidene malonate-based compounds, aliphatic amine or amino alcohol based derivatives, nitro aromatic-based compounds, substituted acrylonitrile-based compounds, ferrocene-based compounds, nitrophenyl azophenol-based compounds, azo-based compounds, polyene-based polymer derivatives, piperidine-based compounds, piperidineoxy-based compounds, boron trifluoride-based compounds, thiadiazole-based compounds, and phosphonate-based compounds.

For example, the ultraviolet absorber may be at least one selected from dimethyl 2-(4-(dimethylamino)benzylidene)malonate, ethyl 2-cyano-3,3-diphenylacrylate, octyldimethylaminobenzoate, p-aminobenzoic acid, octyl salicylate, homosalate, phenyl salicylate, benzyl salicylate, octyl methoxy cinnamate, isoamyl 4-methoxy cinnamate, benzophenone-1 (2,4-dihydroxybenzophenone), benzophenone-2 (2,2',4,4'-tetrahydroxybenzophenone), benzophenone-3 (2-hydroxy-4-methoxybenzophenone), benzophenone-4 (sulisobenzone), benzophenone-6 (2,2'-dihydroxy-4,4'-dimethoxybenzophenone), benzophenone-9 (disodium 2,2'-dihydroxy-4,4'-dimethoxy-5,5'-disulfobenzophenone), 4-methylbenzylidene camphor, avobenzone, bisoctrizole, UV-326 (2-tert-butyl-6-(5-chloro-2H-benzotriazol-2-yl)-4-methylphenol), UV-327 (2,4-di-tert-butyl-6-(5-chloro-2H-benzotriazol-2-yl)phenol), UV-328 (2-(2H-1,2,3-benzotriazol-2-yl)-4,6-bis(2-methylbutan-2-yl)phenol), UV-329 (2-(2'-hydroxy-5'-tert-octylphenyl)benzotriazole), UV-P (2-(2H-benzotriazol-2-yl)-p-cresol), bemotrizinol, T-150 (ethylhexyl triazone), UV-1577 (2-(4,6-diphenyl-1,3,5-triazine-2-yl)-5-[(hexyl)oxy]-phenol), ethyl 2-cyano-3,3-diphenylacrylate, and 4-(dimethylamino)benzaldehyde.

In a preferred embodiment of the present disclosure, two or more ultraviolet absorbers having different absorption wavelengths may be mixed and used, thereby allowing the adhesive film to block a wider range of ultraviolet regions during manufacturing.

In the present disclosure, the ultraviolet absorber may be comprised in an amount of 0.1 to 10 parts by weight, preferably 1 to 5 parts by weight, based on 100 parts by weight of the monomer. Within this range, ultraviolet blocking properties can be exhibited without impairing the curing rate and transparency of the adhesive resin.

In general, when an ultraviolet absorber is added to an adhesive composition, polymerization efficiency is significantly reduced and visible light transmittance decreases. However, by applying the photoinitiating system of the present disclosure, an adhesive resin having excellent polymerization efficiency can be produced even when an ultraviolet absorber is added. Accordingly, the present disclosure can provide an adhesive composition having ultraviolet blocking functionality, high visible-light polymerization rate, and excellent transparency, which can be effectively applied as an optically clear adhesive (OCA) used in displays.

The adhesive composition of the present disclosure may further comprise, in addition to the above components, at least one additional components such as a radical-curable component, a free-radical photoinitiator, or a photosensitizer as needed.

In the present disclosure, an adhesive resin may be obtained by irradiating visible light onto the ultraviolet blocking adhesive composition, and when the composition is applied in the form of a film and then irradiated with visible light, an adhesive film (or adhesive layer) can be formed.

Specifically, when visible light is irradiated onto the adhesive composition, the photopolymerization of the polymerizable monomer occurs through the photoinitiating system, thereby preparing a cured resin.

The method for preparing an adhesive resin according to the present disclosure comprises a step of irradiating

visible light onto the ultraviolet blocking adhesive composition to polymerize the monomer and thereby prepare an adhesive resin.

The bulk-type polymer resin may be obtained by irradiating visible light while the composition is mixed, or a film-type adhesive resin (that is, adhesive film or adhesive layer) may be prepared by applying the mixture onto a substrate and then irradiating visible light. In this case, a method of applying the mixture onto a release sheet, preparing the resin, and then removing the release sheet to obtain a film may be used, or alternatively, the mixture may be directly applied onto a desired target substrate to form a film.

In the present disclosure, it is preferable to further comprise a degassing step using nitrogen gas before irradiating visible light onto the mixture.

In the visible light irradiation step, the irradiation may be performed for at least 1 second, for example, from 1 minute to 1 hour, preferably from 10 to 50 minutes, and more preferably from 20 to 40 minutes. As a result, even when an ultraviolet absorber is added to the adhesive composition, a very high conversion rate can be achieved through light irradiation.

In the visible light irradiation step, the light irradiation dose may be in the range from 200 to 20,000 $mJ/cm^2$, preferably from 500 to 10,000 $mJ/cm^2$, and more preferably from 1,000 to 5,000 $mJ/cm^2$. In the present disclosure, by adjusting the composition of the ultraviolet absorber and the photoinitiating system, a conversion rate of 90% or higher, preferably 95% or higher, can be achieved even at a low irradiation dose. In connection therewith, in the examples of the present disclosure, it was confirmed that a conversion rate of 97% or higher could be achieved at 600 $mJ/cm^2$ depending on the type and content of the photoinitiating system used in the ultraviolet blocking composition.

In the visible light irradiation step, the light intensity may be from 1 $mW/cm^2$ to 1 $W/cm^2$, preferably from 10 to 100 $mW/cm^2$. If the light intensity is too low, the polymerization reaction may not be properly initiated, whereas if the light intensity is too high, the concentration of radicals generated from the co-initiators in the early stage of the polymerization reaction may increase rapidly, causing termination reactions between radicals to dominate over the polymerization reaction and thus hindering polymerization.

In one embodiment of the present disclosure, the prepared resin may be further irradiated with visible light to prepare a resin with a higher degree of polymerization. Specifically, a resin prepared in bulk form by the above light irradiation may be applied onto a substrate and then further irradiated with visible light, or a resin prepared in film form by the above light irradiation may be further irradiated with visible light to prepare a film resin with an improved polymerization rate.

When preparing a film-type adhesive resin using a bulk resin, the bulk resin prepared before the additional light irradiation may be applied onto a substrate. For example, a uniform film can be formed by applying the bulk resin onto a release sheet and adjusting the thickness using a micro-applicator.

At this time, the thickness of the resin before the additional light irradiation may be in the range from 1 $\mu m$ to 8 mm. The thickness can be adjusted as needed; however, if the film is too thin, uniform coating may be difficult, and if it is too thick, the polymerization rate may decrease. Therefore, the thickness is preferably from 10 $\mu m$ to 2 mm, and more preferably from 30 to 100 $\mu m$, for example, from 40 to 80 $\mu m$, in view of coating applicability and polymerization efficiency.

In the additional visible light irradiation step, the light irradiation may be performed for 10 seconds to 1 hour, for example, for 20 seconds to 10 minutes. Through this additional light irradiation, a film resin with a very high polymerization rate can be obtained.

According to the present disclosure, although the adhesive composition comprises an ultraviolet absorber, the resin exhibits excellent conversion efficiency, and despite absorbing visible light, the resulting adhesive resin maintains very high transmittance. Therefore, it can be effectively used as an optically clear adhesive (OCA). For example, as shown in FIG. 1, the adhesive composition according to the present disclosure can be applied to the OCA of a display.

In addition, since the adhesive composition of the present disclosure is capable of being polymerized by visible light, curing can be performed even within materials impermeable to UV light (for example, polyimide), allowing for deep curing.

## Examples

The following examples are provided to describe the present invention in greater detail. However, these examples are presented merely to illustrate certain experimental methods and compositions, and the scope of the present invention is not limited to these examples.

### Preparation Example 1: Preparation of Ultraviolet Blocking Adhesive Composition and Resin Prepared Using the same

An adhesive composition comprising a polymerizable monomer, a photocatalyst, a co-initiator, and an ultraviolet absorber was prepared, and the composition was cured to prepare a resin.

According to the composition described in the following experimental examples, the monomer, photocatalyst, co-initiator I, co-initiator II, and ultraviolet absorber (UVA) were mixed and stirred at room temperature until a homogeneous composition was obtained. For bulk polymerization, the monomer (2-EHA) was used as a solvent. To improve reproducibility, stock solutions of the photocatalyst, co-initiator, and ultraviolet absorber were prepared, diluted, and then stirred to obtain a uniformly mixed solution.

The prepared adhesive composition was degassed with nitrogen gas for 30 minutes to remove oxygen. Thereafter, the stirred composition was cured by irradiating light for 10 seconds at an intensity of 100 mW/cm$^2$ using a blue LED curing device (wavelength band: 455 nm), thereby preparing an adhesive resin.

In the following experimental examples, the raw materials of the composition were indicated by their common names in Table 1, and the absorption wavelengths of the ultraviolet absorbers (UVA-1 and UVA-2) are shown in FIG. 2.

[Table 1]

| Cas No. | Common Name | Chemical Name |
|---|---|---|
| 103-11-7 | 2-EHA | 2-ethylhexyl acrylate |
| 2478-10-6 | HBA | 4-hydroxybutyl acrylate |
| 182442-81-5 | Borate V | [2-(butanoyloxy)ethyl]trimethylazanium butyltriphenylborate |
| 12123-9-75-6 | HNu254 | 4-(octyloxy)phenyl](phenyl)iodonium hexafluoroantimonate |
| 1846598-27-3 | 4DP-IPN | 2,4,5,6-tetrakis(diphenylamino)isophthalonitrile |
| 141688-1-52-1 | 4Cz-IPN | 2,4,5,6-tetrakis(carbazol-9-yl)isophthalonitrile |
| N/A | Ultraviolet absorber 1 | dimethyl 2-(4-(dimethylamino)benzylidene)malonate |
| 5232-99-5 | Ultraviolet absorber 2 | ethyl 2-cyano-3,3-diphenylacrylate |

**Experimental Method: Measurement of Conversion Rate of Adhesive Composition and Resin**

To measure the conversion rate of the adhesive composition and resin before and after curing, the degree of curing was analyzed using Fourier Transform Infrared (FT-IR) spectroscopy. In the analysis results, the conversion rate was calculated according to the following equation by comparing the degree of C=C bonding to C=O bonding of the composition and the resin.

$$\text{Conversion rate(\%)} = \frac{\frac{A_{0(C=C)}}{A_{0(C=O)}} - \frac{A_{t(C=C)}}{A_{t(C=O)}}}{\frac{A_{0(C=C)}}{A_{0(C=O)}}} \times 100$$

In the above equation, $A_{0(C=C)}$, $A_{0(C=O)}$, $A_{t(C=C)}$, and $A_{t(C=O)}$ respectively represent the average peak areas of C=C (830-790 cm$^{-1}$) at 0 seconds, C=O (1760-1660 cm$^{-1}$) at 0 seconds, C=C at t seconds, and C=O at t seconds.

**Experimental Example 1: Comparative Experiment of Conversion Rate According to Experimental Conditions (1)**

Using the method of Preparation Example 1, resins were prepared while varying the conditions of the photocatalyst and ultraviolet absorber (UVA) as shown in Table 2, and the conversion rates before and after curing were measured and compared. The content units of the additives were expressed in ppm as the molar ratio relative to the monomer.

[Table 2]

| Classification | Monomer | Photocatalyst (ppm) | Co-initiator I (ppm) | Co-initiator II (ppm) | UVA (ppm) | Times(s) | Conversion Rate (%) |
|---|---|---|---|---|---|---|---|
| 1-1 | 2-EHA | 4DP-IPN (1) | Borate V (100) | HNu254 (1000) | | 5 | 24.7 |

(continued)

| Classification | Monomer | Photocatalyst (ppm) | Co-initiator I (ppm) | Co-initiator II (ppm) | UVA (ppm) | Times(s) | Conversion Rate (%) |
|---|---|---|---|---|---|---|---|
| 1-2 | 2-EHA | 4DP-IPN (1) | Borate V (100) | HNu254 (1000) | Absorber 1(5000) | 5 | 14.1 |
| 1-3 | 2-EHA | 4DP-IPN (1) | Borate V (100) | HNu254 (1000) | Absorber 2(5000) | 5 | 12.4 |
| 1-4 | 2-EHA | 4DP-IPN (1) | Borate V (100) | HNu254 (1000) | | 5 | 14.4 |
| 1-5 | 2-EHA | 4DP-IPN (1) | Borate V (100) | HNu254 (1000) | Absorber 1(5000) | 5 | 8.7 |
| 1-6 | 2-EHA | 4DP-IPN (1) | Borate V (100) | HNu254 (1000) | Absorber 2(5000) | 5 | 2.1 |

As a result of the experiment, it was confirmed that in the visible-light-curing system, when the light irradiation time was very short, the conversion rate slightly decreased with the addition of the ultraviolet absorber. In addition, it was found that the conversion rate could be controlled depending on the types of photocatalyst and ultraviolet absorber, and that the photocatalyst 4DP-IPN exhibited superior performance compared to 4Cz-IPN.

## Experimental Example 2: Comparative Experiment of Conversion Rate According to Experimental Conditions (2)

Using the method of Preparation Example 1, a resin was prepared by using 3 equivalents of EHA and 1 equivalent of HBA as monomers, and curing the stirred composition by irradiating light for 5 seconds at an intensity of 25 mW/cm$^2$ in a blue LED curing device (wavelength band: 455 nm). The conversion rate of the resin was then measured in the prepolymer state.

Subsequently, the obtained prepolymer was film-cast onto a substrate, irradiated with light at a wavelength of 452 nm and an intensity of 10 mW/cm$^2$ to form an adhesive layer having a thickness of 50 $\mu$m, and a release film having a thickness of 100 $\mu$m was attached thereto. The conversion rate of the prepared adhesive film was also measured.

Based on the above method, the adhesive resin and film were prepared according to the conditions shown in Table 3 below. However, in Examples 2-1 and 2-2, BA:EHA was used at a molar ratio of 4:1 during bulk polymerization; in Example 2-4, the light irradiation time was changed to 10 seconds; and in Example 2-7, the light irradiation time was changed to 2 seconds.

[Table 3]

| Classification | Monomer | Photocatalyst (ppm) | Co-initiator (ppm) | UVA 1 (ppm) | UVA 2 (ppm) | Irradiation dose (J/cm$^2$) | Conversion Rate (%) | |
|---|---|---|---|---|---|---|---|---|
| | | | | | | | Prepolymer | film |
| 2-1 | BA:EHA (4:1) | 4Cz-IPN (10) | DMAEAc (5000) | - | - | 5.4 | 11.9 | 95.3 |
| 2-2 | BA:EHA (4:1) | 4Cz-IPN (10) | DMAEAc (5000) | 1500 (0.3 phr) | 4800 (1 phr) | 27.0 | 11.9 | 95.0 |
| 2-3 | EHA:HBA (3:1) | 4DP-IPN (1) | HNu254 (500) Borate V (300) | - | - | 3.0 | 9.3 | 97.5 |
| 2-4 | EHA:HBA (3:1) | 4DP-IPN (1) | HNu254 (500) Borate V (300) | 2000 (0.3 phr) | 6400 (1 phr) | 6.0 | 6.0 | 97.4 |
| 2-5 | EHA:HBA (3:1) | 4DP-IPN (2) | HNu254 (1000) Borate V (600) | - | - | 1.8 | 19.3 | 98.5 |

(continued)

| Classification | Monomer | Photocatalyst (ppm) | Co-initiator (ppm) | UVA 1 (ppm) | UVA 2 (ppm) | Irradiation dose (J/cm$^2$) | Conversion Rate (%) | |
|---|---|---|---|---|---|---|---|---|
| | | | | | | | Prepolymer | film |
| 2-6 | EHA:HBA (3:1) | 4DP-IPN (2) | HNu254 (1000) Borate V (600) | 2000 (0.3 phr) | 6400 (1 phr) | 3.0 | 10.8 | 98.0 |
| 2-7 | EHA:HBA (3:1) | 4DP-IPN (3) | HNu254 (1000) Borate V (600) | - | - | 0.6 | 13.5 | 97.8 |
| 2-8 | EHA:HBA (3:1) | 4DP-IPN (3) | HNu254 (1000) Borate V (600) | 2000 (0.3phr) | 6400 (1 phr) | 2.4 | 8.3 | 97.8 |

Referring to the above experimental results, when the contents and types of monomer, photocatalyst, and co-initiator were varied and the presence or absence of an ultraviolet absorber was adjusted, the conversion rate of each case was measured. As a result, it was confirmed that the conversion rate in the prepolymer state decreased with the addition of the ultraviolet absorber. However, after casting the prepolymer to prepare a film, almost no difference in conversion rate was observed.

Through this, it was confirmed that the adhesive composition of the present invention exhibits an excellent conversion rate during adhesive layer formation even though it comprises an ultraviolet absorber.

**Experimental Example 3: Analysis of Conversion Rate Change According to Co-initiator Content**

Using the method of Preparation Example 1, adhesive compositions were prepared by changing the content of the co-initiator and the presence or type of ultraviolet absorber as shown in Table 4, and the conversion rates before and after curing were measured and compared.

[Table 4]

| Classification | Monomer | Photocatalyst (ppm) | Co-initiator I (ppm) | Co-initiator II (ppm) | UVA (ppm) | Times(s) | Conversion Rate (%) |
|---|---|---|---|---|---|---|---|
| 3-1 | 2-EHA | 4DP-IPN (1) | Borate V (300) | HNu254 (500) | | 5 | 21.1 |
| 3-2 | 2-EHA | 4DP-IPN (1) | Borate V (300) | HNu254 (500) | Absorber 1(5000) | 5 | 13.6 |
| 3-3 | 2-EHA | 4DP-IPN (1) | Borate V (300) | HNu254 (500) | Absorber 2(5000) | 5 | 12.4 |
| 3-4 | 2-EHA | 4DP-IPN (1) | Borate V (300) | HNu254 (500) | Absorber 1 and 2 (each 5000) | 5 | 12.8 |

As a result of the experiment, when the photocatalyst system according to the present invention was applied, the conversion rate tended to decrease upon addition of the ultraviolet absorber. However, it was confirmed that the conversion rate could be slightly adjusted depending on the type of absorber, and unlike conventional adhesives, the decrease in conversion rate was less than half.

**Experimental Example 4: Analysis of Conversion Rate Change According to Visible Light Irradiation Time (1)**

The composition was prepared in the same manner as in Experimental Example 3-2, except that the visible light irradiation time was varied as shown in Table 5, and after curing, the conversion rates were measured and compared.

[Table 5]

| Classification | Monomer | Photocatalyst (ppm) | Co-initiator I (ppm) | Co-initiator II (ppm) | UVA (ppm) | Times (min) | Conversion Rate (%) |
|---|---|---|---|---|---|---|---|
| 4-1 | 2-EHA | 4DP-IPN (1) | Borate V (300) | HNu254 (500) | Absorber 1(5000) | 1 | 22.3 |
| 4-2 | 2-EHA | 4DP-IPN (1) | Borate V (300) | HNu254 (500) | Absorber 1(5000) | 3 | 52.5 |
| 4-3 | 2-EHA | 4DP-IPN (1) | Borate V (300) | HNu254 (500) | Absorber 1(5000) | 5 | 93.7 |
| 4-4 | 2-EHA | 4DP-IPN (1) | Borate V (300) | HNu254 (500) | Absorber 1(5000) | 10 | 95.1 |
| 4-5 | 2-EHA | 4DP-IPN (1) | Borate V (300) | HNu254 (500) | Absorber 1(5000) | 20 | 99.8 |
| 4-6 | 2-EHA | 4DP-IPN (1) | Borate V (300) | HNu254 (500) | Absorber 1(5000) | 30 | 97.9 |

As a result of the experiment, it was confirmed that the adhesive composition comprising the visible-light-curing system of the present invention was capable of achieving a conversion rate of 90% or higher by adjusting the light irradiation time to 5 minutes or more, even when comprising an ultraviolet absorber, and particularly exhibited an extremely high conversion rate close to 100% when irradiated for 20 minutes.

From the above experimental results, it was confirmed that the adhesive composition to which the photocatalyst system of the present invention was applied could achieve high polymerization conversion depending on the irradiation time, even when comprising an ultraviolet absorber.

**Experimental Example 5: Analysis of Conversion Rate Change According to Visible Light Irradiation Time (2)**

The composition was prepared in the same manner as in Experimental Example 3-3, except that the visible light irradiation time was varied as shown in Table 6, and after curing, the conversion rates were measured and compared.

[Table 6]

| Classification | Monomer | Photocatalyst (ppm) | Co-initiator I (ppm) | Co-initiator II (ppm) | UVA (ppm) | Times (min) | Conversion Rate (%) |
|---|---|---|---|---|---|---|---|
| 5-1 | 2-EHA | 4DP-IPN (1) | Borate V (300) | HNu254 (500) | Absorber 2(5000) | 1 | 26.1 |
| 5-2 | 2-EHA | 4DP-IPN (1) | Borate V (300) | HNu254 (500) | Absorber 2(5000) | 3 | 32.0 |
| 5-3 | 2-EHA | 4DP-IPN (1) | Borate V (300) | HNu254 (500) | Absorber 2(5000) | 5 | 77.4 |
| 5-4 | 2-EHA | 4DP-IPN (1) | Borate V (300) | HNu254 (500) | Absorber 2(5000) | 10 | 96.9 |
| 5-5 | 2-EHA | 4DP-IPN (1) | Borate V (300) | HNu254 (500) | Absorber 2(5000) | 20 | 99.9 |
| 5-6 | 2-EHA | 4DP-IPN (1) | Borate V (300) | HNu254 (500) | Absorber 2(5000) | 30 | 99.9 |

As a result of the experiment, it was confirmed that in the case of the adhesive composition comprising the visible-light-curing system using the 4DP-IPN photocatalyst, a conversion rate of 70% or higher could be achieved when the light irradiation time was 5 minutes or longer, even when an ultraviolet absorber was added. When the irradiation time was 10 minutes or longer, the conversion rate increased to 95% or higher, and particularly, when irradiated for 20 minutes or more, a high conversion rate close to 100% was achieved.

Accordingly, it was confirmed that the adhesive composition of the present invention could be very effectively

polymerized by visible light, even when an ultraviolet absorber was added.

**Experimental Example 6: Analysis of Conversion Rate Change According to Visible Light Irradiation Time (3)**

The composition was prepared in the same manner as in Experimental Example 3-4, except that the visible light irradiation time was varied as shown in Table 7, and after curing, the conversion rates were measured and compared.

[Table 7]

| Classification | Monomer | Photocatalyst (ppm) | Co-initiator I (ppm) | Co-initiator II (ppm) | UVA (ppm) | Times (min) | Conversion Rate (%) |
|---|---|---|---|---|---|---|---|
| 6-1 | 2-EHA | 4DP-IPN (1) | Borate V (300) | HNu254 (500) | Absorber 1 and 2 (each 5000) | 1 | 24.0 |
| 6-2 | 2-EHA | 4DP-IPN (1) | Borate V (300) | HNu254 (500) | Absorber 1 and 2 (each 5000) | 3 | 44.2 |
| 6-3 | 2-EHA | 4DP-IPN (1) | Borate V (300) | HNu254 (500) | Absorber 1 and 2 (each 5000) | 5 | 88.3 |
| 6-4 | 2-EHA | 4DP-IPN (1) | Borate V (300) | HNu254 (500) | Absorber 1 and 2 (each 5000) | 10 | 89.2 |
| 6-5 | 2-EHA | 4DP-IPN (1) | Borate V (300) | HNu254 (500) | Absorber 1 and 2 (each 5000) | 20 | 94.8 |
| 6-6 | 2-EHA | 4DP-IPN (1) | Borate V (300) | HNu254 (500) | Absorber 1 and 2 (each 5000) | 30 | 97.4 |

Referring to the above experimental results, in the case of the adhesive composition comprising the visible-light-curing system using the 4DP-IPN photocatalyst according to the present invention, it was confirmed that the conversion rate could be improved to 80% or higher by adjusting the light irradiation time even when an ultraviolet absorber was added, and that when irradiated for 20 minutes or more, the conversion rate increased to 90% or higher.

Accordingly, it was confirmed that the adhesive composition of the present invention could undergo smooth polymerization by visible light, even though it comprises an ultraviolet absorber.

**Experimental Example 7: Comparative Experiment of Conversion Rate According to Visible Light Irradiation Time (4)**

As shown in Table 8, the adhesive compositions were prepared, cured by adjusting the visible light irradiation time, and the conversion rates were measured and compared.

[Table 8]

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 7-1 | 2-EHA:HBA (3:1) | 4DP-IPN (1) | Borate V (300) | HNu254 (500) | UVA 1 (0.3) | 5 | 91.6 |
| 7-2 | 2-EHA:HBA (3:1) | 4DP-IPN (1) | Borate V (300) | HNu254 (500) | UVA 1 (0.3) | 10 | 99.5 |
| 7-3 | 2-EHA:HBA (3:1) | 4DP-IPN (1) | Borate V (300) | HNu254 (500) | UVA 1 (0.3) | 20 | 97.4 |
| 7-4 | 2-EHA:HBA (3:1) | 4DP-IPN (1) | Borate V (300) | HNu254 (500) | UVA 1 (0.3) | 30 | 96.8 |

According to the above experimental results, it was confirmed that the adhesive composition in which the photocatalyst system was introduced according to the present invention could be polymerized with an excellent conversion rate of 90% or higher when irradiated with light for 5 minutes or more, even though it comprises an ultraviolet absorber, and particularly, when irradiated for 10 minutes, an extremely high conversion rate close to 100% was achieved.

**Experimental Example 8: Comparative Experiment of Conversion Rate According to Visible Light Irradiation Time (5)**

As shown in Table 9, the adhesive compositions were prepared, cured by varying the visible light irradiation time, and the conversion rates were measured and compared.

[Table 9]

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 8-1 | 2-EHA:HBA (3:1) | 4DP-IPN (1) | Borate V (300) | HNu254 (500) | UVA 2 (1) | 5 | 37.8 |
| 8-2 | 2-EHA:HBA (3:1) | 4DP-IPN (1) | Borate V (300) | HNu254 (500) | UVA 2 (1) | 10 | 81.2 |
| 8-3 | 2-EHA:HBA (3:1) | 4DP-IPN (1) | Borate V (300) | HNu254 (500) | UVA 2 (1) | 20 | 88.4 |
| 8-4 | 2-EHA:HBA (3:1) | 4DP-IPN (1) | Borate V (300) | HNu254 (500) | UVA 2 (1) | 30 | 99.0 |

According to the above experimental results, it was confirmed that the adhesive composition incorporating the photocatalyst system according to the present invention could be polymerized with an excellent conversion rate of 80% or higher when irradiated with light for 10 minutes or more, even though it comprises an ultraviolet absorber. When irradiated for 20 minutes or more, the polymerization rate reached 85% or higher, and particularly, when irradiated for 30 minutes, an extremely high conversion rate close to 100% was achieved.

**Experimental Example 9: Comparative Experiment of Conversion Rate According to Visible Light Irradiation Time (6)**

As shown in Table 10, the adhesive compositions were prepared, cured by varying the visible light irradiation time, and the conversion rates were measured and compared.

[Table 10]

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 9-1 | 2-EHA:HBA (3:1) | 4DP-IPN (1) | Borate V (300) | HNu254 (500) | UVA 1(0.3) UVA 2 (1) | 5 | 19.1 |
| 9-2 | 2-EHA:HBA (3:1) | 4DP-IPN (1) | Borate V (300) | HNu254 (500) | UVA 1(0.3) UVA 2 (1) | 10 | 51.2 |
| 9-3 | 2-EHA:HBA (3:1) | 4DP-IPN (1) | Borate V (300) | HNu254 (500) | UVA 1(0.3) UVA 2 (1) | 20 | 97.2 |
| 9-4 | 2-EHA:HBA (3:1) | 4DP-IPN (1) | Borate V (300) | HNu254 (500) | UVA 1(0.3) UVA 2 (1) | 30 | 98.4 |

Referring to the above experimental results, it was confirmed that the adhesive composition incorporating the photocatalyst system according to the present invention exhibited excellent polymerization performance, achieving a conversion rate of 97% or higher when irradiated with light for 20 minutes or more, even though an ultraviolet absorber was added.

Accordingly, it was verified that by applying the present invention, an adhesive resin having ultraviolet blocking properties and excellent conversion rate could be prepared.

## Experimental Example 10: Analysis of Conversion Rate Change According to Photocatalyst and Co-initiator

As shown in Table 11, adhesive compositions were prepared by varying the contents of the photocatalyst and co-initiator and the visible light irradiation time, and the conversion rates after curing were measured and compared.

[Table 11]

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 10-1 | 2-EHA:HBA (3:1) | 4DP-IPN (2) | Borate V (600) | HNu254 (1000) | - | 5 | 19.3 |
| 10-2 | 2-EHA:HBA (3:1) | 4DP-IPN (2) | Borate V (600) | HNu254 (1000) | UVA 1(0.3) | 5 | 15.9 |
| 10-3 | 2-EHA:HBA (3:1) | 4DP-IPN (2) | Borate V (600) | HNu254 (1000) | UVA 2 (1) | 5 | 16.7 |
| 10-4 | 2-EHA:HBA (3:1) | 4DP-IPN (2) | Borate V (600) | HNu254 (1000) | UVA 1(0.3) UVA 2 (1) | 5 | 10.8 |
| 10-5 | 2-EHA:HBA (3:1) | 4DP-IPN (3) | Borate V (600) | HNu254 (1000) | - | 2 | 15.1 |
| 10-6 | 2-EHA:HBA (3:1) | 4DP-IPN (3) | Borate V (600) | HNu254 (1000) | UVA 1(0.3) | 2 | 5.5 |
| 10-7 | 2-EHA:HBA (3:1) | 4DP-IPN (3) | Borate V (600) | HNu254 (1000) | UVA 2(1) | 2 | 2.7 |

(continued)

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 10-8 | 2-EHA:HBA (3:1) | 4DP-IPN (3) | Borate V (600) | HNu254 (1000) | UVA 1(0.3) UVA 2(1) | 2 | 2.3 |

As a result of the experiment, it was confirmed that under the given monomer and co-initiator conditions, the conversion rate was higher when the content of the photocatalyst 4DP-IPN was 2 ppm than when it was 3 ppm, and that the decrease in conversion rate was small even when the type of ultraviolet absorber was changed. Accordingly, it was confirmed that in the present invention, the conversion rate could be controlled depending on the content of the photocatalyst.

**Experimental Example 11: Analysis of Conversion Rate Change According to Visible Light Irradiation Time (6)**

The compositions were prepared in the same manner as in Experimental Examples 10-2 and 10-5, except that the visible light irradiation time was varied as shown in Table 12, and the conversion rates of the resins were measured after curing.

[Table 12]

| Classification | Monomer | Photocatalys t (ppm) | Co-initiator I (ppm) | Co-initiator II (ppm) | UVA (phr) | Times (min) | Conversion Rate (%) |
|---|---|---|---|---|---|---|---|
| 11-1 | 2-EHA:HBA (3:1) | 4DP-IPN (2) | Borate V (600) | HNu254 (1000) | UVA 1(0.3) | 1 | 28.5 |
| 11-2 | 2-EHA:HBA (3:1) | 4DP-IPN (2) | Borate V (600) | HNu254 (1000) | UVA 1(0.3) | 3 | 94.9 |
| 11-3 | 2-EHA:HBA (3:1) | 4DP-IPN (2) | Borate V (600) | HNu254 (1000) | UVA 1(0.3) | 5 | 99.8 |
| 11-4 | 2-EHA:HBA (3:1) | 4DP-IPN (2) | Borate V (600) | HNu254 (1000) | UVA 1(0.3) | 10 | 97.0 |
| 11-5 | 2-EHA:HBA (3:1) | 4DP-IPN (2) | Borate V (600) | HNu254 (1000) | UVA 1(0.3) | 20 | 97.0 |
| 11-6 | 2-EHA:HBA (3:1) | 4DP-IPN (2) | Borate V (600) | HNu254 (1000) | UVA 1(0.3) | 30 | 96.6 |
| 11-7 | 2-EHA:HBA (3:1) | 4DP-IPN (3) | Borate V (600) | HNu254 (1000) | UVA 1(0.3) | 1 | 46.3 |
| 11-8 | 2-EHA:HBA (3:1) | 4DP-IPN (3) | Borate V (600) | HNu254 (1000) | UVA 1(0.3) | 3 | 98.3 |
| 11-9 | 2-EHA:HBA (3:1) | 4DP-IPN (3) | Borate V (600) | HNu254 (1000) | UVA 1(0.3) | 5 | 97.6 |
| 11-10 | 2-EHA:HBA (3:1) | 4DP-IPN (3) | Borate V (600) | HNu254 (1000) | UVA 1(0.3) | 10 | 96.6 |
| 11-11 | 2-EHA:HBA (3:1) | 4DP-IPN (3) | Borate V (600) | HNu254 (1000) | UVA 1(0.3) | 20 | 96.6 |
| 11-12 | 2-EHA:HBA (3:1) | 4DP-IPN (3) | Borate V (600) | HNu254 (1000) | UVA 1(0.3) | 30 | 99.6 |

As a result of the experiment, it was confirmed that when 2-EHA and HBA were used as monomers, the adhesive composition incorporating the photocatalyst system of the present invention could be polymerized with an excellent

conversion rate of 94% or higher when irradiated with light for 3 minutes or more, even though an ultraviolet absorber was added. Furthermore, when the amount of the photocatalyst was increased, the conversion rate was further improved, showing a high conversion rate of 98% or higher when irradiated with light for 3 minutes or more.

Accordingly, it was confirmed that by applying the present invention, an ultraviolet blocking adhesive exhibiting an excellent conversion rate could be prepared even when an ultraviolet absorber was added.

**Experimental Example 12: Comparative Experiment of Conversion Rate According to Visible Light Irradiation Time (7)**

The compositions were prepared in the same manner as in Experimental Examples 10-3 and 10-6, except that the visible light irradiation time was varied as shown in Table 13, and the conversion rates of the resins were measured after curing.

[Table 13]

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 12-1 | 2-EHA:HBA (3:1) | 4DP-IPN (2) | Borate V (600) | HNu254 (1000) | UVA 2(1) | 1 | 19.5 |
| 12-2 | 2-EHA:HBA (3:1) | 4DP-IPN (2) | Borate V (600) | HNu254 (1000) | UVA 2(1) | 3 | 60.8 |
| 12-3 | 2-EHA:HBA (3:1) | 4DP-IPN (2) | Borate V (600) | HNu254 (1000) | UVA 2(1) | 5 | 94.9 |
| 12-4 | 2-EHA:HBA (3:1) | 4DP-IPN (2) | Borate V (600) | HNu254 (1000) | UVA 2(1) | 10 | 98.6 |
| 12-5 | 2-EHA:HBA (3:1) | 4DP-IPN (2) | Borate V (600) | HNu254 (1000) | UVA 2(1) | 20 | 96.2 |
| 12-6 | 2-EHA:HBA (3:1) | 4DP-IPN (2) | Borate V (600) | HNu254 (1000) | UVA 2(1) | 30 | 95.9 |
| 12-7 | 2-EHA:HBA (3:1) | 4DP-IPN (3) | Borate V (600) | HNu254 (1000) | UVA 2(1) | 1 | 13.0 |
| 12-8 | 2-EHA:HBA (3:1) | 4DP-IPN (3) | Borate V (600) | HNu254 (1000) | UVA 2(1) | 3 | 73.4 |
| 12-9 | 2-EHA:HBA (3:1) | 4DP-IPN (3) | Borate V (600) | HNu254 (1000) | UVA 2(1) | 5 | 96.9 |
| 12-10 | 2-EHA:HBA (3:1) | 4DP-IPN (3) | Borate V (600) | HNu254 (1000) | UVA 2(1) | 10 | 98.9 |
| 12-11 | 2-EHA:HBA (3:1) | 4DP-IPN (3) | Borate V (600) | HNu254 (1000) | UVA 2(1) | 20 | 95.9 |
| 12-12 | 2-EHA:HBA (3:1) | 4DP-IPN (3) | Borate V (600) | HNu254 (1000) | UVA 2(1) | 30 | 92.1 |

Referring to the above experimental results, it was confirmed that when 2-EHA and HBA were used as monomers, the adhesive composition incorporating the photocatalyst system of the present invention exhibited an excellent polymerization rate of 95% or higher when irradiated with light for 5 minutes or more, even though an ultraviolet absorber was added, and a very high polymerization rate of 98% or higher when irradiated for 10 minutes.

Accordingly, it was confirmed that when applying the present invention, the adhesive composition could exhibit an excellent conversion rate even when an ultraviolet absorber was added.

**Experimental Example 13: Comparative Experiment of Conversion Rate According to Visible Light Irradiation Time (8)**

The compositions were prepared in the same manner as in Experimental Examples 10-4 and 10-7, except that

the visible light irradiation time was varied as shown in Table 14, and the conversion rates of the resins were measured after curing.

[Table 14]

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 13-1 | 2-EHA:HBA (3:1) | 4DP-IPN (2) | Borate V (600) | HNu254 (1000) | UVA 1(0.3) UVA 2(1) | 1 | 11.7 |
| 13-2 | 2-EHA:HBA (3:1) | 4DP-IPN (2) | Borate V (600) | HNu254 (1000) | UVA 1(0.3) UVA 2(1) | 3 | 48.6 |
| 13-3 | 2-EHA:HBA (3:1) | 4DP-IPN (2) | Borate V (600) | HNu254 (1000) | UVA 1(0.3) UVA 2(1) | 5 | 98.0 |
| 13-4 | 2-EHA:HBA (3:1) | 4DP-IPN (2) | Borate V (600) | HNu254 (1000) | UVA 1(0.3) UVA 2(1) | 10 | 98.5 |
| 13-5 | 2-EHA:HBA (3:1) | 4DP-IPN (2) | Borate V (600) | HNu254 (1000) | UVA 1(0.3) UVA 2(1) | 20 | 96.8 |
| 13-6 | 2-EHA:HBA (3:1) | 4DP-IPN (2) | Borate V (600) | HNu254 (1000) | UVA 1(0.3) UVA 2(1) | 30 | 96.2 |
| 13-7 | 2-EHA:HBA (3:1) | 4DP-IPN (3) | Borate V (600) | HNu254 (1000) | UVA 1(0.3) UVA 2(1) | 1 | 8.2 |
| 13-8 | 2-EHA:HBA (3:1) | 4DP-IPN (3) | Borate V (600) | HNu254 (1000) | UVA 1(0.3) UVA 2(1) | 3 | 78.6 |
| 13-9 | 2-EHA:HBA (3:1) | 4DP-IPN (3) | Borate V (600) | HNu254 (1000) | UVA 1(0.3) UVA 2(1) | 5 | 97.7 |
| 13-10 | 2-EHA:HBA (3:1) | 4DP-IPN (3) | Borate V (600) | HNu254 (1000) | UVA 1(0.3) UVA 2(1) | 10 | 97.7 |
| 13-11 | 2-EHA:HBA (3:1) | 4DP-IPN (3) | Borate V (600) | HNu254 (1000) | UVA 1(0.3) UVA 2(1) | 20 | 98.0 |

(continued)

| Classification | Monomer | Photocatalyst (ppm) | Co-initiator I (ppm) | Co-initiator II (ppm) | UVA (phr) | Times (min) | Conversion Rate (%) |
|---|---|---|---|---|---|---|---|
| 13-12 | 2-EHA:HBA (3:1) | 4DP-IPN (3) | Borate V (600) | HNu254 (1000) | UVA 1(0.3) UVA 2(1) | 30 | 96.7 |

As a result of the experiment, it was confirmed that when 2-EHA and HBA were used as monomers, the adhesive composition incorporating the photocatalyst system of the present invention could be polymerized with an excellent conversion rate of 97% or higher even when an ultraviolet absorber was added, and that an irradiation time of 5 to 30 minutes was suitable.

Accordingly, it was found that the present invention makes it possible to prepare an ultraviolet blocking adhesive having an excellent conversion rate even when an ultraviolet absorber is added.

## Experimental Example 14: Analysis of Ultraviolet Blocking Property and Visible-Light Transmittance (1)

An adhesive composition was prepared according to the method of Preparation Example 1 using EHA and HBA as monomers, 4DP-IPN (3 ppm) as a photocatalyst, HNu254 (1000 ppm) and Borate V (600 ppm) as co-initiators, and UVA 1 and 2 as ultraviolet absorbers in amounts of 0.3 and 1 phr, respectively. A film was prepared from the resulting adhesive composition, and its transmittance according to wavelength was analyzed using a UV/vis spectrophotometer. For comparison, an adhesive composition was prepared with the same formulation except that the ultraviolet absorbers were not added, and its transmittance was measured and compared.

FIG. 3 shows a graph of the transmittance measurement results. In the adhesive without the ultraviolet absorbers, the transmittance was as high as 90% even in the wavelength range of about 300 to 400 nm. In contrast, the ultraviolet blocking adhesive according to the present invention exhibited very low transmittance around 400 nm, while maintaining excellent transmittance in the visible-light region.

From these results, it was confirmed that the ultraviolet blocking adhesive of the present invention provides effective UV blocking performance due to the ultraviolet absorbers, while maintaining high transmittance in the visible-light region.

## Experimental Example 15: Analysis of Ultraviolet Blocking Property and Visible-Light Transmittance (2)

Using the adhesives having a conversion rate of 95% or higher from Experimental Examples 11 to 13, the ultraviolet blocking regions were confirmed, and the averaged result graph is shown in FIG. 4.

As a result of the experiment, it was found that ultraviolet absorber 2 exhibited more effective ultraviolet blocking performance compared with ultraviolet absorber 1, and that when ultraviolet absorbers 1 and 2 were used in combination, the ultraviolet blocking effect was further improved.

Accordingly, it was confirmed that, in forming the ultraviolet blocking adhesive composition by applying a photocatalyst, co-initiator, and ultraviolet absorber to the adhesive composition according to the present invention, ultraviolet absorber 2 is preferable to absorber 1, and the combined use of ultraviolet absorbers 1 and 2 is most preferable.

## Experimental Example 16: Gel Content Analysis

An adhesive composition was prepared according to the methods of Preparation Example 1 to Experimental Example 13-10 using EHA and HBA as monomers, 4DP-IPN (3 ppm) as a photocatalyst, HNu254 (1000 ppm) and Borate V (600 ppm) as co-initiators, and UVA 1 and 2 as ultraviolet absorbers in amounts of 0.3 phr and 1 phr, respectively.

For the ultraviolet blocking adhesive thus prepared, the gel content of the cured adhesive film was measured as follows: the adhesive was dissolved in toluene for 24 hours, and the cross-linked adhesive was separated and dried in a vacuum oven at 40 °C for 24 hours. The weight of the dried sample was then measured. The cross-linked adhesive was separated by filtration through a steel mesh (#200, ~74 μm). The results of the gel content measurements obtained by the above method are shown in Table 15 below.

[Table 15]

| Classification | Monomer | Photocatalyst (ppm) | Co-initiator I (ppm) | Co-initiator II (ppm) | UVA (phr) | Gel content(%) |
|---|---|---|---|---|---|---|
| 14-1 | 2-EHA:HBA (3:1) | 4DP-IPN (3) | Borate V (600) | HNu254 (1000) | - | 84.0 (±1.5) |
| 14-2 | 2-EHA:HBA (3:1) | 4DP-IPN (3) | Borate V (600) | HNu254 (1000) | UVA 1(0.3) | 82.7 (±0.2) |
| 14-3 | 2-EHA:HBA (3:1) | 4DP-IPN (3) | Borate V (600) | HNu254 (1000) | UVA 2(1) | 81.1 (+1.5) |
| 14-4 | 2-EHA:HBA (3:1) | 4DP-IPN (3) | Borate V (600) | HNu254 (1000) | UVA 1(0.3) UVA 2(1) | 84.7 (±2.2) |

As a result of the experiment, it was confirmed that there was almost no difference in gel content among the adhesives incorporating the photocatalyst system of the present invention, even when the ultraviolet absorber was added.
Accordingly, it was found that the present invention enables the preparation of an ultraviolet blocking adhesive having excellent gel content even when an ultraviolet absorber is added.

**Experimental Example 17: Analysis of Mechanical Properties**

An adhesive composition was prepared according to the methods of Preparation Example 1 to Experimental Example 13-10 using EHA and HBA as monomers, 4DP-IPN (3 ppm) as a photocatalyst, HNu254 (1000 ppm) and Borate V (600 ppm) as co-initiators, and UVA 1 and 2 as ultraviolet absorbers in amounts of 0.3 phr and 1 phr, respectively.
To evaluate the mechanical properties of the prepared ultraviolet blocking adhesive, dynamic mechanical analysis (DMA) was performed under a condition of 25 °C to measure strain recovery, stress relaxation, and maximum stress. The DMA measurement was conducted using a film-tension clamp. Specimens were prepared by forming the adhesive into films of 50 μm thickness, cutting them into uniform pieces (1 cm x 0.5 cm), and bonding them between PMMA substrates. The measurements were carried out at 25 °C, where each specimen was stretched to 300 % strain for 10 minutes and then allowed to recover for 5 minutes. The results of the mechanical property measurements obtained by the above method are shown in Table 16 below.

[Table 16]

| Classification | Monomer | Photocatalyst (ppm) | Co-initiator I (ppm) | Co-initiator II (ppm) | UVA (phr) | Strain recovery (at 25°C, %) | Stress relaxation (at 25°C, %) | Mas stress (kPa) |
|---|---|---|---|---|---|---|---|---|
| 15-1 | 2-EHA:HBA (3:1) | 4DP-IPN (3) | Borate V (600) | HNu254 (1000) | - | 84.0 (± 1.5) | 54.6 (± 1.2) | 64.1 (± 7.0) |
| 15-2 | 2-EHA:HBA (3:1) | 4DP-IPN (3) | Borate V (600) | HNu254 (1000) | UVA 1(0.3) | 82.7 (±0.2) | 56.8 (±1.0) | 56.9 (±8.8) |
| 15-3 | 2-EHA:HBA (3:1) | 4DP-IPN (3) | Borate V (600) | HNu254 (1000) | UVA 2(1) | 81.1 (±1.5) | 55.1 (±0.7) | 53.2 (±12.1) |
| 15-4 | 2-EHA:HBA (3:1) | 4DP-IPN (3) | Borate V (600) | HNu254 (1000) | UVA 1(0.3) UVA 2(1) | 84.7 (±2.2) | 54.2 (±2.5) | 64.0 (±6.9) |

As a result of the experiment, it was confirmed that there was no significant difference in the mechanical properties among the adhesives incorporating the photocatalyst system of the present invention, even when the ultraviolet absorber was added.
Accordingly, it was found that the present invention enables the preparation of an ultraviolet blocking adhesive having excellent mechanical properties even when an ultraviolet absorber is added.

**Experimental Example 18: Viscoelastic Property Analysis**

An adhesive composition was prepared according to the methods of Preparation Example 1 to Experimental Example 13-10 using EHA and HBA as monomers, 4DP-IPN (3 ppm) as a photocatalyst, HNu254 (1000 ppm) and Borate V (600 ppm) as co-initiators, and UVA 1 and UVA 2 as ultraviolet absorbers in amounts of 0.3 phr and 1 phr, respectively.

To analyze the viscoelastic properties of the prepared ultraviolet blocking adhesive, a rheometer was used to measure storage modulus (G'), loss modulus (G"), and damping factor (tan δ). Specimens were prepared by laminating the adhesive to a thickness of 0.8 to 1 mm and cutting it into circular pieces with a diameter of 8 mm. Measurements were conducted at 25 to 85 °C under a shear frequency of 1 Hz and a strain of 0.5 %. The viscoelastic properties measured by the above method are shown in Tables 17 to 19 below.

[Table 17]

| Classification | Monomer | Photocatalyst (ppm) | Co-initiator I (ppm) | Co-initiator II (ppm) | UVA (phr) | Strain modulus (G') (kPa) | | | |
|---|---|---|---|---|---|---|---|---|---|
| | | | | | | -20°C | 25°C | 60°C | 85°C |
| 17-1 | 2-EHA:HBA (3:1) | 4DP-IPN (3) | Borate V (600) | HNu254 (1000) | - | 145.0 | 41.2 | 28.0 | 22.8 |
| 17-2 | 2-EHA:HBA (3:1) | 4DP-IPN (3) | Borate V (600) | HNu254 (1000) | UVA 1 (0.3) UVA 2 (1) | 150.3 | 45.0 | 36.1 | 32.7 |

[Table 18]

| Classification | Monomer | Photocatalyst (ppm) | Co-initiator I (ppm) | Co-initiator II (ppm) | UVA (phr) | Loss modulus (G") (kPa) | | | |
|---|---|---|---|---|---|---|---|---|---|
| | | | | | | -20°C | 25°C | 60°C | 85°C |
| 17-1 | 2-EHA:HBA (3:1) | 4DP-IPN (3) | Borate V (600) | HNu254 (1000) | - | 134.6 | 13.4 | 11.1 | 10.0 |
| 17-2 | 2-EHA:HBA (3:1) | 4DP-IPN (3) | Borate V (600) | HNu254 (1000) | UVA 1 (0.3) UVA 2 (1) | 145.4 | 11.1 | 8.8 | 8.1 |

[Table 19]

| Classification | Monomer | Photocatalyst (ppm) | Co-initiator I (ppm) | Co-initiator II (ppm) | UVA (phr) | Damping factor (tan δ) | | | |
|---|---|---|---|---|---|---|---|---|---|
| | | | | | | -20°C | 25°C | 60°C | 85°C |
| 17-1 | 2-EHA:HBA (3:1) | 4DP-IPN (3) | Borate V (600) | HNu254 (1000) | - | 0.93 | 0.33 | 0.40 | 0.44 |
| 17-2 | 2-EHA:HBA (3:1) | 4DP-IPN (3) | Borate V (600) | HNu254 (1000) | UVA 1 (0.3) UVA 2 (1) | 0.97 | 0.25 | 0.24 | 0.25 |

As a result of the experiment, it was confirmed that, in the case of the adhesive incorporating the photocatalyst system of the present invention, there was little difference in viscoelasticity before and after the addition of the ultraviolet absorber.

Accordingly, it was found that the present invention enables the preparation of an ultraviolet blocking adhesive having excellent viscoelastic properties even when an ultraviolet absorber is added.

**Preparation Example 2: Preparation of Ultraviolet Blocking Adhesive Composition and Resin Prepared Using the Same**

An adhesive composition comprising a polymerizable monomer, a photoinitiation system, and an ultraviolet absorber was prepared and then cured to prepare a resin.

According to the composition described in the following experimental examples, the monomer, photoinitiation system, and ultraviolet absorber (UVA) were mixed and stirred at room temperature until a homogeneous composition was obtained. At this time, for bulk polymerization, the monomer mixture (2-EHA:HBA = 4:1) was used as a solvent.

The prepared adhesive composition was degassed with nitrogen gas for 30 minutes to remove oxygen. Thereafter, the stirred composition was cured by irradiation with light at an intensity of 25 mW/cm$^2$ for 10 seconds using a blue LED curing device (wavelength range: 455 nm) to prepare an adhesive resin.

The partially cured composition was then placed on a PET film, covered with a release film, and the thickness of the adhesive was adjusted using an applicator. The composition was cured by irradiation with light using a blue LED curing device (wavelength range: 452 nm) to prepare an adhesive film.

In the following experimental examples, the materials used in the composition are shown by their common names in Table 20 below.

[Table 20]

| Cas No. | Common Name | Chemical Name |
|---|---|---|
| 103-11-7 | 2-EHA | 2-ethylhexyl acrylate |
| 2478-10-6 | HBA | 4-hydroxybutyl acrylate |
| 947-19-3 | Irgacure 184 | 1-hydroxycyclohexyl phenyl ketone |
| 162881-26-7 | Irgacure 819 | bis(2,4,6-trimethylbenzoyl)phenylphosphine oxide |
| 10373-78-1 | Camphorquinone | 2,3-Bomanedione |
| 10287-53-3 | EDB | ethyl 4-(dimethylamino)benzoate |
| N/A | Ultraviolet absorber 1 | dimethyl 2-(4-(dimethylamino)benzylidene)malonate |
| 5232-99-5 | Ultraviolet absorber 2 | ethyl 2-cyano-3,3-diphenylacrylate |

**Experimental Example 19: Comparison of Film Conversion Rates Depending on the Presence or Absence of UVA**

An adhesive resin was formed according to the method of Preparation Example 2, except that the presence or absence of the ultraviolet absorber and the light irradiation dose were adjusted as shown in Table 21 below. Each adhesive resin was cast into a film between two release films having a thickness of 100 $\mu$m, and then light having a wavelength of 452 nm was irradiated at an intensity of 10 mW/cm$^2$ to form a film with a thickness of 50 $\mu$m. The conversion rate of each prepared adhesive film was measured, and the results are shown in FIG. 5 and Table 21 below.

[Table 21]

| Classification | Photoinitiator (ppm) | UVA (phr) | Irradiation dose (mJ/cm$^2$) | Conversion rate(%) |
|---|---|---|---|---|
| 18-1 | Irgacure 819 (1000) | - | 100 | 94.51 |
| 18-2 | Irgacure 819 (1000) | - | 300 | 97.84 |
| 18-3 | Irgacure 819 (1000) | - | 600 | 97.14 |
| 18-4 | Irgacure 819 (1000) | - | 1800 | 100 |
| 18-5 | Irgacure 819 (1000) | - | 3000 | 100 |
| 18-6 | Irgacure 819 (1000) | - | 6000 | 100 |
| 18-7 | Irgacure 819 (1000) | UVA 1(0.3)<br>UVA 2(1) | 100 | 9.42 |
| 18-8 | Irgacure 819 (1000) | UVA 1(0.3)<br>UVA 2(1) | 300 | 25.89 |

(continued)

| Classification | Photoinitiator (ppm) | UVA (phr) | Irradiation dose (mJ/cm$^2$) | Conversion rate(%) |
|---|---|---|---|---|
| 18-9 | Irgacure 819 (1000) | UVA 1(0.3) UVA 2(1) | 600 | 57.32 |
| 18-10 | Irgacure 819 (1000) | UVA 1(0.3) UVA 2(1) | 1800 | 99.53 |
| 18-11 | Irgacure 819 (1000) | UVA 1(0.3) UVA 2(1) | 3000 | 100 |
| 18-12 | Irgacure 819 (1000) | UVA 1(0.3) UVA 2(1) | 6000 | 100 |

According to the experimental results, when the visible light irradiation dose was 600 mJ/cm$^2$ or lower, the conversion rate in the film state decreased with the addition of the ultraviolet absorber. However, when the irradiation dose was 1,800 mJ/cm$^2$ or higher, the conversion rate reached 99.5 % or more, showing no difference compared with the case where no ultraviolet absorber was added.

Accordingly, it was found that the adhesive composition of the present invention can achieve an excellent conversion rate by irradiating visible light during curing and adjusting the irradiation dose to a certain level or higher, even when the composition comprises an ultraviolet absorber.

**Experimental Example 20: Comparison of Film Conversion Rates Depending on Photoinitiator Content**

An adhesive resin was formed according to the method of Preparation Example 2, except that the content of the photoinitiator was adjusted as shown in Table 22 below. Each adhesive resin was cast into a film between two release films having a thickness of 100 μm, and then light having a wavelength of 452 nm was irradiated at an intensity of 10 mW/cm$^2$ to form a film with a thickness of 50 μm. The conversion rate of each prepared adhesive film was measured, and the results are shown in FIG. 5 and Table 22 below.

[Table 22]

| Classification | Photoinitiator (ppm) | UVA (phr) | Irradiation dose (mJ/cm$^2$) | Conversion rate(%) |
|---|---|---|---|---|
| 19-1 | Irgacure 819 (5000) | UVA 1(0.3) UVA 2(1) | 100 | 28.6 |
| 19-2 | Irgacure 819 (5000) | UVA 1(0.3) UVA 2(1) | 300 | 70.88 |
| 19-3 | Irgacure 819 (5000) | UVA 1(0.3) UVA 2(1) | 600 | 92.99 |
| 19-4 | Irgacure 819 (5000) | UVA 1(0.3) UVA 2(1) | 1800 | 100 |
| 19-5 | Irgacure 819 (5000) | UVA 1(0.3) UVA 2(1) | 3000 | 100 |
| 19-6 | Irgacure 819 (5000) | UVA 1(0.3) UVA 2(1) | 6000 | 100 |
| 19-7 | Irgacure 819 (10000) | UVA 1(0.3) UVA 2(1) | 100 | 28.97 |
| 19-8 | Irgacure 819 (10000) | UVA 1(0.3) UVA 2(1) | 300 | 89.96 |
| 19-9 | Irgacure 819 (10000) | UVA 1(0.3) UVA 2(1) | 600 | 97.46 |
| 19-10 | Irgacure 819 (10000) | UVA 1(0.3) UVA 2(1) | 1800 | 100 |

(continued)

| Classification | Photoinitiator (ppm) | UVA (phr) | Irradiation dose ($mJ/cm^2$) | Conversion rate(%) |
|---|---|---|---|---|
| 19-11 | Irgacure 819 (10000) | UVA 1(0.3)<br>UVA 2(1) | 3000 | 100 |
| 19-12 | Irgacure 819 (10000) | UVA 1(0.3)<br>UVA 2(1) | 6000 | 100 |

As a result of the experiment, when the content of the photoinitiator was adjusted to 5,000 ppm and 10,000 ppm, the conversion rate of the film increased with the increase in photoinitiator content, and in particular, a significant improvement in the initial conversion rate was observed.

Accordingly, it was confirmed that the adhesive composition of the present invention can improve the film conversion rate by adjusting the photoinitiator content and the light irradiation dose.

## Experimental Example 21: Comparison of Film Conversion Rates Depending on the Type of Initiator

An adhesive composition was prepared according to the method of Preparation Example 2, except that the composition of the adhesive was as shown in Table 23 below. Light having a wavelength of 365 nm was irradiated at an intensity of 1 $mW/cm^2$ to prepare a prepolymer, which was then cast into a film between two release films having a thickness of 100 μm. Subsequently, light having a wavelength of 366 nm was irradiated at an intensity of 10 $mW/cm^2$ to form an adhesive layer with a thickness of 50 μm. The conversion rate of each prepared adhesive film was measured, and the results are shown in Table 23 below.

[Table 23]

| Classification | Photoinitiator (ppm) | UVA (phr) | Irradiation dose($mJ/cm^2$) | Conversion rate(%) |
|---|---|---|---|---|
| 20-1 | Irgacure 184 (1000) | - | 100 | 13.7 |
| 20-2 | Irgacure 184 (1000) | - | 300 | 14.01 |
| 20-3 | Irgacure 184 (1000) | - | 600 | 33.32 |
| 20-4 | Irgacure 184 (1000) | - | 1800 | 98.39 |
| 20-5 | Irgacure 184 (1000) | - | 3000 | 100 |
| 20-6 | Irgacure 184 (1000) | - | 6000 | 100 |
| 20-7 | Irgacure 184 (1000) | UVA 1(0.3)<br>UVA 2(1) | 100 | 6.42 |
| 20-8 | Irgacure 184 (1000) | UVA 1(0.3)<br>UVA 2(1) | 300 | 6.21 |
| 20-9 | Irgacure 184 (1000) | UVA 1(0.3)<br>UVA 2(1) | 600 | 8.88 |
| 20-10 | Irgacure 184 (1000) | UVA 1(0.3)<br>UVA 2(1) | 1800 | 12.73 |
| 20-11 | Irgacure 184 (1000) | UVA 1(0.3)<br>UVA 2(1) | 3000 | 14.11 |
| 20-12 | Irgacure 184 (1000) | UVA 1(0.3)<br>UVA 2(1) | 6000 | 23.89 |

When the above experimental results were compared with those of Experimental Example 19, it was confirmed that the conversion rate in the film state varied depending on the type of photoinitiator used with different absorption wavelengths. In particular, when Irgacure 819 was used instead of Irgacure 184, a higher conversion rate was obtained.

This confirmed that, in the adhesive composition of the present invention, it is preferable to use a photoinitiator having high absorption efficiency in the visible light region.

**Experimental Example 22: Comparison of Film Conversion Rates Depending on the Use of Co-initiator**

An adhesive composition was prepared according to the method of Preparation Example 2, except that the composition of the adhesive was as shown in Table 24 below. Light having a wavelength of 365 nm was irradiated at an intensity of 1 mW/cm$^2$ to prepare a prepolymer, which was then cast into a film between two release films having a thickness of 100 μm. Subsequently, light having a wavelength of 452 nm was irradiated at an intensity of 10 mW/cm$^2$ to form an adhesive layer with a thickness of 50 μm. The conversion rate of each prepared adhesive film was measured, and the results are shown in Table 24 below.

[Table 24]

| Classification | Photoinitiator (ppm) | Co-initiator (ppm) | UVA (phr) | Irradiation dose (mJ/cm$^2$) | Conversion rate(%) |
|---|---|---|---|---|---|
| 21-1 | Camphorquinone (600) | EDB (5000) | UVA 1 (0.3) UVA 2 (1) | 100 | 8.05 |
| 21-2 | Camphorquinone (600) | EDB (5000) | UVA 1 (0.3) UVA 2 (1) | 300 | 14.07 |
| 21-3 | Camphorquinone (600) | EDB (5000) | UVA 1 (0.3) UVA 2 (1) | 600 | 23.02 |
| 21-4 | Camphorquinone (600) | EDB (5000) | UVA 1 (0.3) UVA 2 (1) | 1800 | 42.46 |
| 21-5 | Camphorquinone (600) | EDB (5000) | UVA 1 (0.3) UVA 2 (1) | 3000 | 71.60 |
| 21-6 | Camphorquinone (600) | EDB (5000) | UVA 1 (0.3) UVA 2 (1) | 6000 | 87.76 |

According to the above experimental results, when the conversion rate was measured depending on the use of a photoinitiator that undergoes a Norrish type II reaction and a co-initiator, the conversion rate was somewhat lower than that of the Norrish type I reaction. However, even in this case, it was confirmed that a commercially acceptable level of conversion rate could be achieved by increasing the light irradiation dose, even when an ultraviolet absorber was added.

Accordingly, it was confirmed that the adhesive composition of the present invention can employ a photoinitiating system based on the combination of a Norrish type II photoinitiator and a co-initiator.

**Experimental Example 23: Analysis of Ultraviolet Blocking Property and Visible-Light Transmittance**

An adhesive composition was prepared according to the method of Preparation Example 2, except that Irgacure 819 was used as the photoinitiator at 10 000 ppm, and UVA 1 and UVA 2 were added as ultraviolet absorbers at 0.3 phr and 1 phr, respectively. A film was prepared from the resulting adhesive composition, and its transmittance according to wavelength was analyzed using a UV/vis spectrophotometer. In addition, in the adhesive composition, a film was prepared using a photoinitiating system comprising a photoinitiator (camphorquinone, 600 ppm) and a co-initiator (EDB, 5000 ppm) instead of Irgacure 819, and the same analysis was performed.

FIG. 6 shows the results of the transmittance measurements. It was found that, in films prepared using an adhesive composition of the present invention employing as the photoinitiating system either a Norrish type I photoinitiator or a combination of a Norrish type II photoinitiator and a co-initiator, the transmittance was very low below 400 nm, while excellent transmittance was maintained in the visible-light region.

From these results, it was confirmed that, when using the ultraviolet blocking adhesive of the present invention, excellent ultraviolet blocking performance can be achieved due to the ultraviolet absorber, while providing high transmittance in the visible-light region.

Although specific embodiments of the present invention have been described above, the invention is not limited to the foregoing embodiments. Various modifications and variations can be made without departing from the spirit and scope of the invention, and such modifications and variations shall also be understood to fall within the technical scope of the present invention.

## Claims

1. **1.** An ultraviolet blocking adhesive composition comprising:

   a polymerizable monomer having an ethylenically unsaturated bond;
   a photoinitiating system that absorbs light in the wavelength range of 300 to 800 nm to initiate a curing reaction; and
   an ultraviolet absorber.

2. **2.** The ultraviolet blocking adhesive composition according to claim 1, wherein the photoinitiating system comprises a photocatalyst having a thermally activated delayed fluorescence (TADF) property, and a co-initiator.

3. **3.** The ultraviolet blocking adhesive composition according to claim 2, wherein the photocatalyst is a cyanoarene-based compound.

4. **4.** The ultraviolet blocking adhesive composition according to claim 2,

   wherein the photocatalyst is represented by the following Chemical Formula 1:

[Chemical Formula 1]

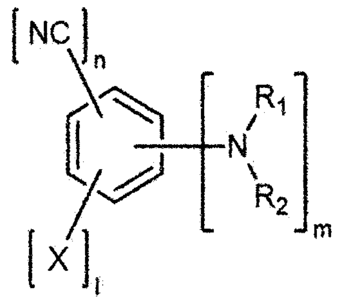

wherein, in Chemical Formula 1,
$R_1$ and $R_2$ are each independently hydrogen, deuterium, a halogen atom, a nitro group ($-NO_2$), a cyano group (-CN), -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or $R_1$ and $R_2$ are linked to form a substituted or unsubstituted carbazole structure,
X is a halogen atom selected from the group consisting of F, Cl, Br, and I,
n is 1 or 2,
m is an integer from 3 to 5,
1 is 0 or 1, and
n + m + 1 is an integer from 4 to 6.

5. **5.** The ultraviolet blocking adhesive composition according to claim 2,

   wherein the photocatalyst is represented by the following Chemical Formula 2 or 3:

[Chemical Formula 2]

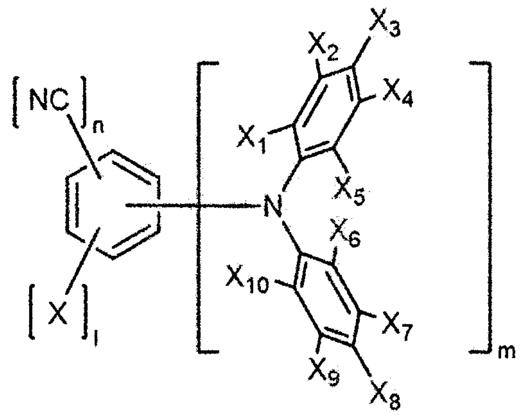

[Chemical Formula 3]

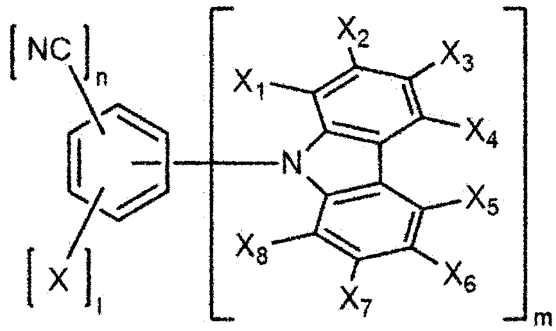

wherein, in Chemical Formula 2, $X_1$ to $X_{10}$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl;
wherein, in Chemical Formula 3, $X_1$ to $X_8$ are each independently hydrogen, deuterium, a halogen atom, $-NO_2$, -CN, -COOR (where R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; and
wherein, in Chemical Formulae 2 and 3,
X is each independently a halogen atom selected from the group consisting of F, Cl, Br, and I,
n is each independently 1 or 2,
m is each independently an integer from 3 to 5,
l is each independently 0 or 1, and
n + m + l is each independently an integer from 4 to 6.

**6.** The ultraviolet blocking adhesive composition according to claim 2,

wherein the co-initiator comprises
a co-initiator I comprising an anionic borate salt compound or an amine compound; and
a co-initiator II comprising a cationic salt compound or an alkyl halide.

**7.** The ultraviolet blocking adhesive composition according to claim 6,
wherein the cationic salt compound is at least one compound selected from the group consisting of an iodonium salt, a sulfonium salt, and a phosphonium salt.

**8.** The ultraviolet blocking adhesive composition according to claim 1,
wherein the photoinitiating system comprises a Norrish type I photoinitiator.

**9.** The ultraviolet blocking adhesive composition according to claim 8,

wherein the Norrish type I photoinitiator comprises a compound represented by the following Chemical Formula 14:

[Chemical Formula 14]

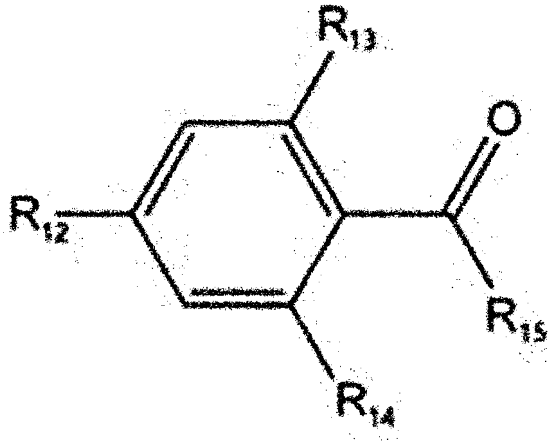

wherein, in Chemical Formula 14,
$R_{12}$, $R_{13}$, and $R_{14}$ are each independently hydrogen, deuterium, or a substituted or unsubstituted $C_1$-$C_{24}$ alkyl, $C_2$-$C_{24}$ alkenyl, $C_2$-$C_{24}$ alkynyl, $C_4$-$C_{18}$ aryl, mercapto group, hydroxy group, alkylthio group, or alkoxy group; and
$R_{15}$ is a substituted or unsubstituted $C_1$-$C_{24}$ alkyl, $C_2$-$C_{24}$ alkenyl, $C_2$-$C_{24}$ alkynyl, $C_4$-$C_{18}$ aryl, phosphine oxide group, phosphinate group, amine group, or morpholino group.

**10.** The ultraviolet blocking adhesive composition according to claim 9,
wherein the Norrish type I photoinitiator comprises at least one compound selected from the group consisting of an acylphosphine oxide-based photoinitiator, an acetophenonebased photoinitiator, a benzoin-based photoinitiator, and a benzoin ether-based photoinitiator.

**11.** The ultraviolet blocking adhesive composition according to claim 1,
wherein the photoinitiating system comprises a Norrish type II photoinitiator and a co-initiator.

**12.** The ultraviolet blocking adhesive composition according to claim 11,

wherein the Norrish type II photoinitiator comprises a compound represented by the following Chemical Formula 15:

[Chemical Formula 15]

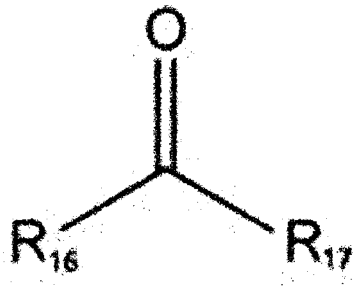

wherein, in Chemical Formula 15,
$R_{16}$ and $R_{17}$ are each independently a substituted or unsubstituted $C_1$-$C_{24}$ alkyl, $C_2$-$C_{24}$ alkenyl, $C_2$-$C_{24}$ alkynyl, or $C_4$-$C_{18}$ aryl;
and $R_{16}$ and $R_{17}$ exist independently, or one or more atoms of the respective atoms of $R_{16}$ and $R_{17}$ are linked to each other to form a ring.

**13.** The ultraviolet blocking adhesive composition according to claim 11,
wherein the Norrish type II photoinitiator comprises at least one compound selected from the group consisting of a

thioxanthone-based photoinitiator, a benzophenone-based photoinitiator, and a camphorquinone-based photoinitiator.

**14.** The ultraviolet blocking adhesive composition according to claim 11,

wherein the co-initiator comprises a compound represented by the following Chemical Formula 6:

[Chemical Formula 6]

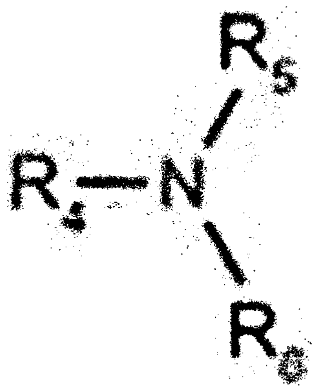

wherein, in Chemical Formula 6,
$R_4$, $R_5$, and $R_6$ are each independently hydrogen, deuterium, $NH_xR_{2-x}$, -OR, -COR, - COOR, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl;
R is hydrogen or a $C_1$-$C_{24}$ alkyl; and
x is an integer from 0 to 2.

**15.** The ultraviolet blocking adhesive composition according to claim 1,
wherein the ultraviolet absorber absorbs light in the wavelength range of 200 to 400 nm.

**16.** The ultraviolet blocking adhesive composition according to claim 1,
wherein the ultraviolet absorber comprises at least one compound selected from the group consisting of a hydroxyl benzophenone-based compound; a benzotriazole-based compound; a diazenyl-based compound; a hindered amine-based compound; an organometallic compound comprising a metal selected from the group consisting of iron, nickel, and cobalt; a salicylate-based compound; a cinnamate-based derivative; a resorcinol monobenzoate-based compound; an oxanilide-based compound; a hydroxybenzoate-based compound; an organic or inorganic pigment; carbon black; a coumarin-based compound; a stilbene derivative; a benzoxazolyl-based compound; a benzimidazolyl-based compound; a naphthylimide-based compound; a diamino stilbene sulfonate-based compound; a triazine stilbene-based compound; a phenyl ester-based compound; an s-triazine-based compound; a hydroxyphenyl derivative of a benzoxazole-based compound; a hexamethylphosphoric triamide-based compound; a benzylidene malonate-based compound; an aliphatic amine or amino alcohol-based derivative; a nitro aromatic compound; a substituted acrylonitrile-based compound; a ferrocene-based compound; a nitrophenylazophenol-based compound; an azo-based compound; a polyenebased polymer derivative; a piperidine-based compound; a piperidineoxy-based compound; a boron trifluoride-based compound; a thiadiazole-based compound; and a phosphonate-based compound.

**17.** A method for preparing an adhesive resin, comprising a step of polymerizing a polymerizable monomer by irradiating visible light onto the ultraviolet blocking adhesive composition according to any one of claims 1 to 16.

**18.** The method for preparing an adhesive resin according to claim 17,
wherein the visible light irradiation is performed for 1 second to 1 hour.

**19.** The method for preparing an adhesive resin according to claim 17,
further comprising a step of additionally irradiating visible light after applying the prepared resin onto a substrate.

**20.** An ultraviolet blocking adhesive film formed using the ultraviolet blocking adhesive composition according to any one

of claims 1 to 16.

【FIG. 1】

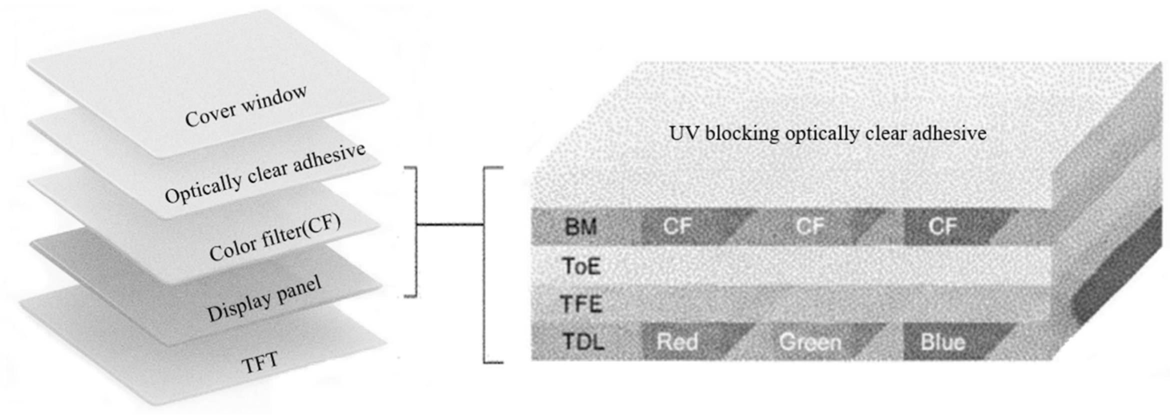
Cover window
Optically clear adhesive
Color filter(CF)
Display panel
TFT
UV blocking optically clear adhesive
BM
CF
CF
CF
ToE
TFE
TDL
Red
Green
Blue

【FIG. 2】

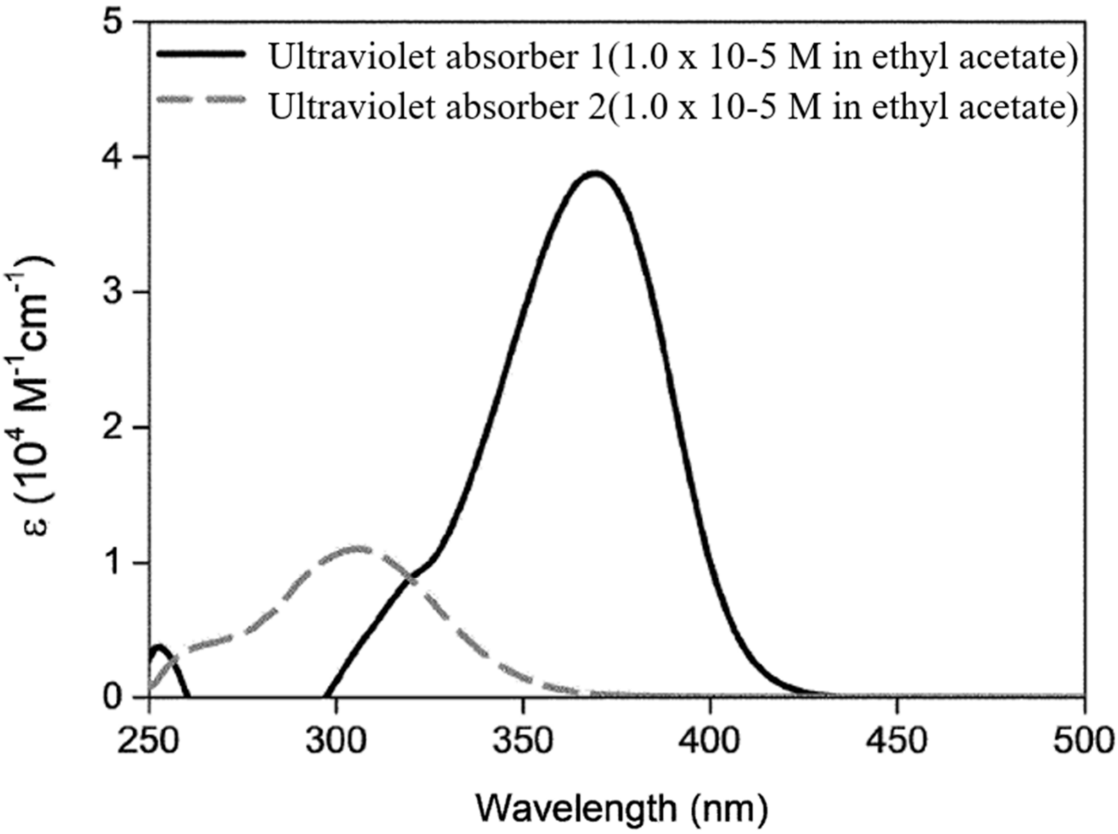
Ultraviolet absorber 1(1.0 x 10-5 M in ethyl acetate)
Ultraviolet absorber 2(1.0 x 10-5 M in ethyl acetate)
ε (10⁴ M⁻¹cm⁻¹)
0
1
2
3
4
5
250
300
350
400
450
500
Wavelength (nm)

【FIG. 3】

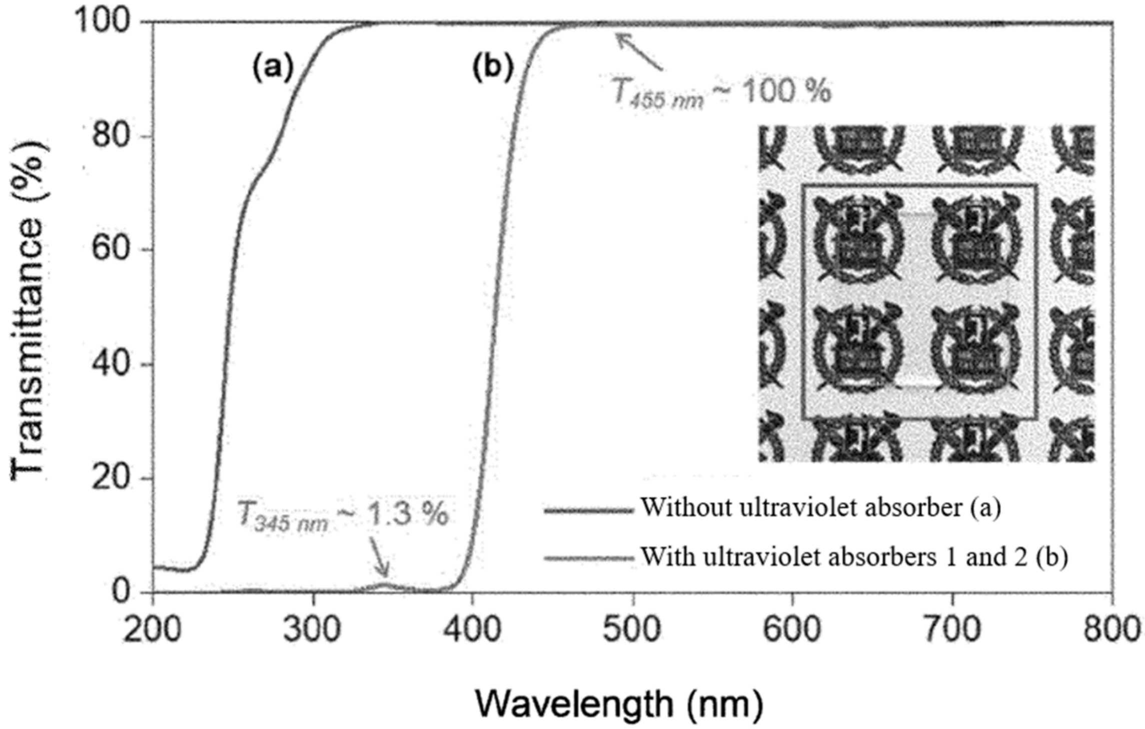
Transmittance (%)
Wavelength (nm)
100
80
60
40
20
0
200
300
400
500
600
700
800
(a)
(b)
T455 nm ~ 100 %
T345 nm ~ 1.3 %
Without ultraviolet absorber (a)
With ultraviolet absorbers 1 and 2 (b)

【FIG. 4】

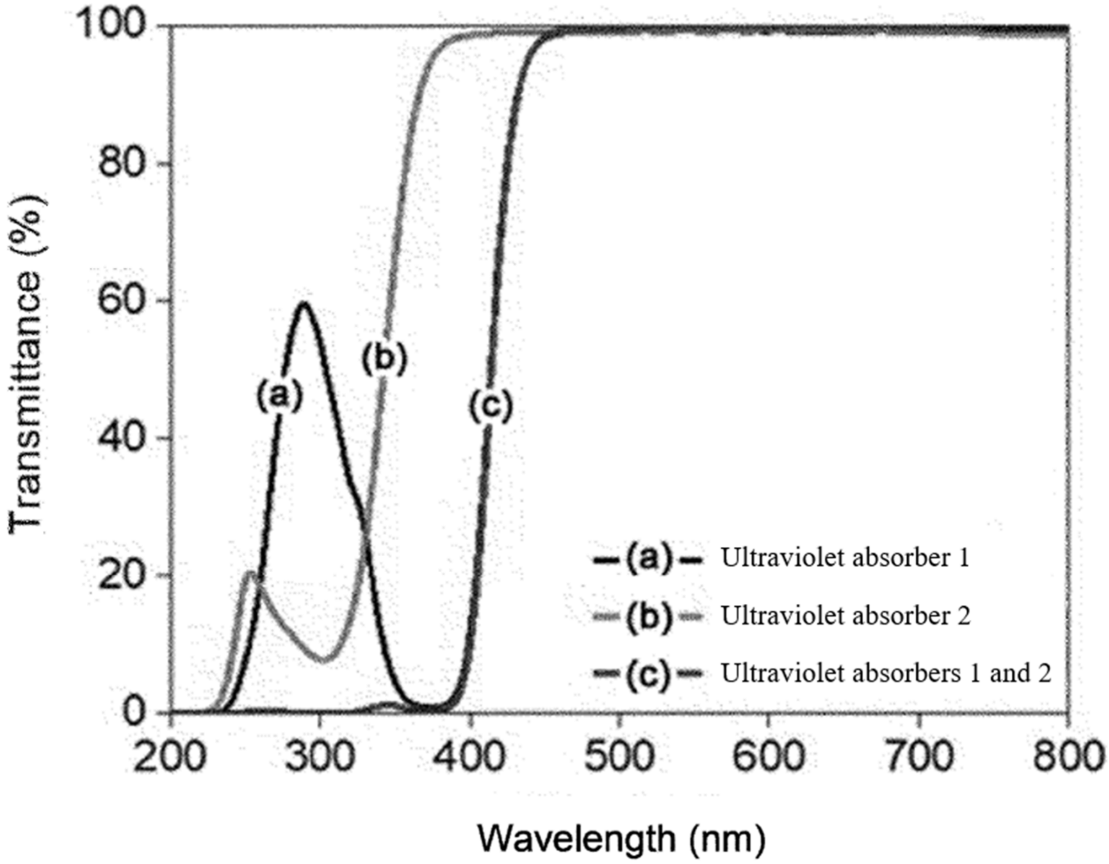
Transmittance (%)
100
80
60
40
20
0
200
300
400
500
600
700
800
Wavelength (nm)
(a)
(b)
(c)
(a) Ultraviolet absorber 1
(b) Ultraviolet absorber 2
(c) Ultraviolet absorbers 1 and 2

【FIG. 5】

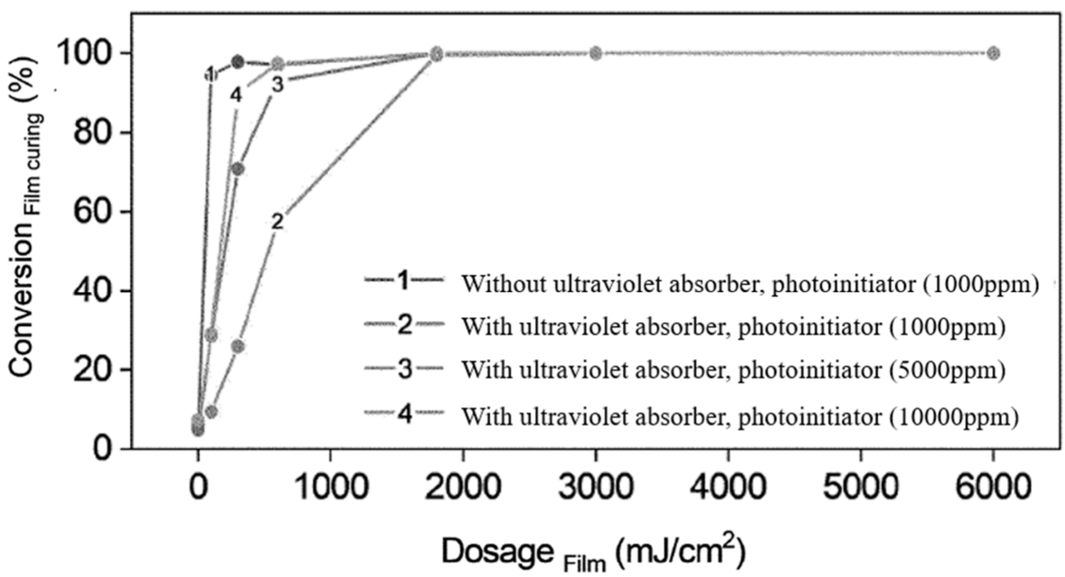
Conversion Film curing (%)
100
80
60
40
20
0
0
1000
2000
3000
4000
5000
6000
Dosage Film (mJ/cm2)
1 Without ultraviolet absorber, photoinitiator (1000ppm)
2 With ultraviolet absorber, photoinitiator (1000ppm)
3 With ultraviolet absorber, photoinitiator (5000ppm)
4 With ultraviolet absorber, photoinitiator (10000ppm)

【FIG. 6】

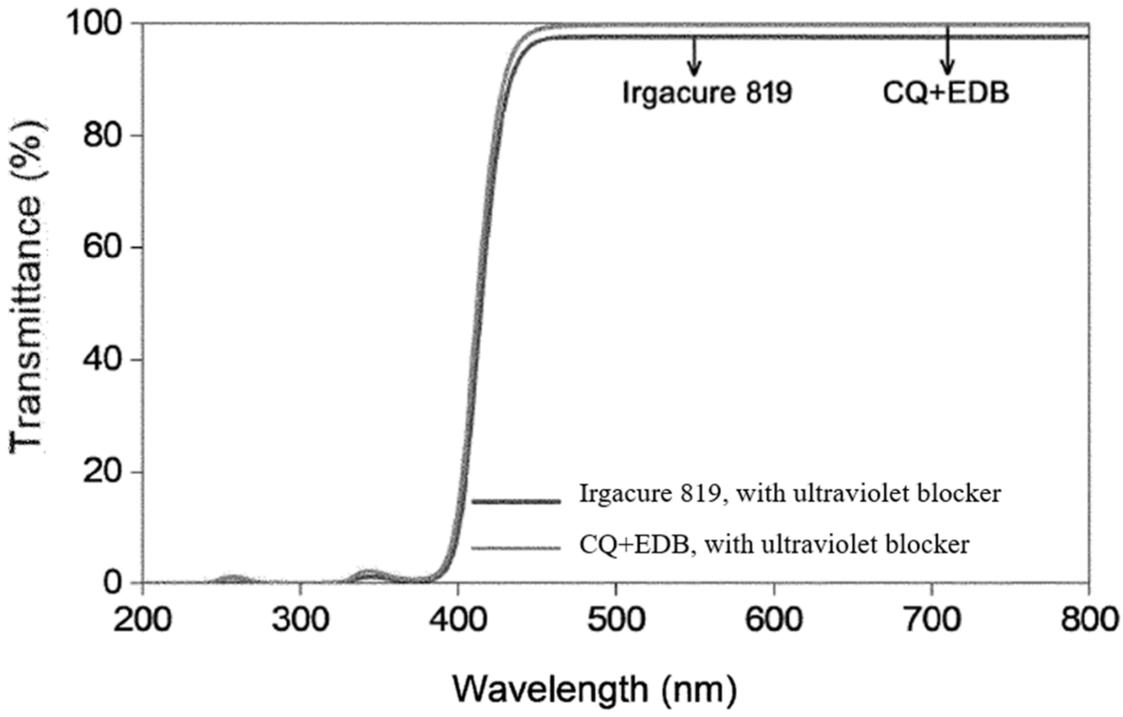
100
80
60
40
20
0
Transmittance (%)
200
300
400
500
600
700
800
Wavelength (nm)
Irgacure 819
CQ+EDB
Irgacure 819, with ultraviolet blocker
CQ+EDB, with ultraviolet blocker

**INTERNATIONAL SEARCH REPORT**

International application No.
**PCT/KR2024/005336**

**A. CLASSIFICATION OF SUBJECT MATTER**

**C09J 9/00**(2006.01)i; **C09J 4/00**(2006.01)i; **C09J 11/06**(2006.01)i; **C08K 5/07**(2006.01)i; **C08K 5/00**(2006.01)i; **C08K 5/16**(2006.01)i; **C09J 7/00**(2006.01)i; **C09J 7/35**(2018.01)i; **C08F 20/00**(2006.01)i; **C08F 2/50**(2006.01)i

According to International Patent Classification (IPC) or to both national classification and IPC

**B. FIELDS SEARCHED**

Minimum documentation searched (classification system followed by classification symbols)

C09J 9/00(2006.01); A61K 6/083(2006.01); B01J 35/00(2006.01); C07F 5/02(2006.01); C07F 9/30(2006.01); C08F 2/48(2006.01); C09J 11/06(2006.01); C09J 191/00(2006.01); C09J 4/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 광개시제(photo initiator), 광경화(photo curing), 자외선 흡수제(UV absorber), 접착제(adhesive), 필름(film)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0146614 A (KOREA RESEARCH INSTITUTE OF CHEMICAL TECHNOLOGY) 06 December 2021 (2021-12-06)<br>See claims 1-3 and 11-18; and paragraphs [0066]-[0072]. | 1-20 |
| Y | WO 2022-005947 A1 (BOARD OF REGENTS, THE UNIVERSITY OF TEXAS SYSTEM) 06 January 2022.<br>See claims 1-6, 51-55 and 101; page 52, line 30 - page 53, line 4 and page 89, lines 9-15; tables 4 and 6; and figure 70. | 1-20 |
| A | JP 2015-517013 A (AVERY DENNISON CORPORATION) 18 June 2015 (2015-06-18)<br>See claims 1 and 5; and paragraphs [0007] and [0043]. | 1-20 |
| A | JP 2001-527565 A (CIBA SPECIALTY CHEMICALS HOLDING INC.) 25 December 2001 (2001-12-25)<br>See claims 1-23. | 1-20 |
| A | JP 2016-510314 A (BASF SE) 07 April 2016 (2016-04-07)<br>See entire document. | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 July 2024** | **29 July 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/005336**

| Patent document cited in search report | Publication date (day/month/year) | Patent family member(s) | Publication date (day/month/year) |
|---|---|---|---|
| KR 10-2021-0146614 A | 06 December 2021 | None | |
| WO 2022-005947 A1 | 06 January 2022 | US 2023-0357453 A1 | 09 November 2023 |
| JP 2015-517013 A | 18 June 2015 | AU 2012-376541 A1 | 17 October 2013 |
| | | AU 2012-376541 B2 | 12 May 2016 |
| | | CN 104349680 A | 11 February 2015 |
| | | EP 2836078 A1 | 18 February 2015 |
| | | JP 6049857 B2 | 21 December 2016 |
| | | KR 10-2014-0143837 A | 17 December 2014 |
| | | MX 2014012326 A | 25 September 2015 |
| | | MX 356868 B | 18 June 2018 |
| | | RU 2014143724 A | 10 June 2016 |
| | | US 2014-0057101 A1 | 27 February 2014 |
| | | US 2017-0009104 A1 | 12 January 2017 |
| | | US 9453151 B2 | 27 September 2016 |
| | | WO 2013-154610 A1 | 17 October 2013 |
| JP 2001-527565 A | 25 December 2001 | AU 7764998 A | 11 December 1998 |
| | | EP 0983277 A1 | 08 March 2000 |
| | | EP 0983277 B1 | 22 January 2003 |
| | | TW 412540 A | 21 November 2000 |
| | | TW 412540 B | 21 November 2000 |
| | | US 6087062 A | 11 July 2000 |
| | | WO 98-52952 A1 | 26 November 1998 |
| JP 2016-510314 A | 07 April 2016 | CN 104870456 A | 26 August 2015 |
| | | CN 110172073 A | 27 August 2019 |
| | | CN 110204573 A | 06 September 2019 |
| | | CN 110845530 A | 28 February 2020 |
| | | CN 114181249 A | 15 March 2022 |
| | | EP 2935289 A1 | 28 October 2015 |
| | | EP 2935289 B1 | 26 June 2019 |
| | | EP 3459957 A1 | 27 March 2019 |
| | | JP 6400021 B2 | 03 October 2018 |
| | | KR 10-2207166 B1 | 26 January 2021 |
| | | US 10040810 B2 | 07 August 2018 |
| | | US 2016-0039851 A1 | 11 February 2016 |
| | | WO 2014-095724 A1 | 26 June 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190011220
- KR 1020220109090